# EUROPEAN PATENT SPECIFICATION

(11) **EP 1 459 973 B1**
(45) Date of publication and mention of the grant of the patent: **09.12.2015**
(21) Application number: 04005113.8
(22) Date of filing: 04.03.2004
(51) Int. Cl.: B62M 7/02

(54) **Low deck vehicle**
Fahrzeug mit abgesenktem Boden
Véhicule à plancher bas

(30) Priority: 19.03.2003 JP 2003075332; 19.03.2003 JP 2003075471; 19.03.2003 JP 2003075796
(43) Date of publication of application: 22.09.2004
(73) Proprietor: HONDA MOTOR CO., LTD., Tokyo (JP)
(72) Inventor: Takenaka, Masahiko, Wako-shi Saitama (JP)
(74) Representative: Weickmann & Weickmann

(56) References cited:
- EP-A- 0 265 014
- EP-A- 1 055 594
- FR-A- 2 533 625
- JP-A- 2001 088 763

## Description

The present invention relates to technique for improving the engine mounting structure of a low deck vehicle.

As for a low deck vehicle such as a scooter-type motorcycle or three-wheeled vehicle, technique for mounting a longitudinal V-type engine below a body frame is known (for example, refer to
(1) (JP-A-2002-19678 (Figs. 1 and 7 on third to fifth pages))
(2) (JP-A-2001-88763 (Figs. 1 and 2 on a third page)) and
(3) (JP-A-10-167156 (Figs. 1 to 3 on a third page)).

According to the patent document 1, in a conventional type low deck vehicle (1) is disclosed according to the preamble of claim 1, wherein a front fuel tank and rear housing space are provided under a seat, right and left low decks for a rider seated on the seat to put his/her feet are provided on the front side of the seat, a part for straddling (concretely, a center tunnel) at height at which the rider can straddle is provided between the right and left low decks, an engine is provided under the part for straddling and an air cleaner for the engine is provided in front of a head pipe.

According to the patent document 2, in a conventional type low deck vehicle (2), a front fuel tank and rear housing space are provided under a seat, right and left low decks are provided on the front side of the seat, a part for straddling at height at which a rider can straddle is provided between the right and left low decks, a V-type engine is provided under the part for straddling and an air cleaner is provided immediately at the back of a head pipe.

According to the patent document 3, in a conventional type low deck vehicle (3), a transmission is provided under a seat, right and left low decks are provided on the front side of the seat, a part for straddling at height at which a rider can straddle is provided between the right and left low decks, an engine is provided under the part for straddling and an air cleaner is provided immediately at the back of a head pipe.

However, in the conventional type low deck vehicle (1), a cylinder of the engine is directed forward and is arranged on the front downside of the part for straddling. Space in front of the engine is narrowed by quantity in which the cylinder is directed forward. For example, there is a limit to arrange the air cleaner in the narrow space. Therefore, the air cleaner is arranged in front of the head pipe. As a result, an intake coupling pipe for connecting the air cleaner and the engine has an intricate shape. Therefore, to enhance the performance of the engine, there is room for improvement.

The conventional type low deck vehicle (2) and (3) are also similar.

Then, the object of the invention is to provide technique that enables enhancing the performance of an engine mounted in a low deck vehicle.

To achieve the object, a low deck vehicle such as a scooter-type motorcycle or three-wheeled vehicle is provided as defined by the features of claim 1, in which housing space is provided under a seat, right and left low decks for a rider seated on the seat to put his/her feet are provided on the front side of the seat, a part for straddling at height at which the rider can straddle in sitting on the seat is provided between the right and left low decks and an engine is provided under the part for straddling, and is characterized in that a crankshaft of the engine is arranged under the part for straddling and the top of a cylinder of the engine is opposite to the part for straddling.

In the low deck vehicle such as a scooter-type motorcycle or three-wheeled vehicle, as the crankshaft of the engine is arranged under the part for straddling and the top of the cylinder of the engine is opposite to the part for straddling, large space can be secured in front of the engine.

An intake coupling pipe can be made a relatively simple shape near to a straight line by arranging an air intake system including the intake coupling pipe and an air cleaner effectively utilizing the space. Therefore, the air intake system and the V-type engine can be efficiently coupled and the performance of the engine can be enhanced. Further, a degree of freedom in designing the air intake system is enhanced.

Furthermore, further space in a relatively low position can be secured above the air cleaner by arranging the air cleaner in a relatively low position in front of the engine. A functional part such as a fuel tank can be easily arranged effectively utilizing the further space.

Claim 2 is characterized in that a fuel tank is arranged before a part for straddling.

As the fuel tank is not required to be arranged under the seat by arranging the fuel tank before the part for straddling, large space is secured under the seat, the capacity of a housing box can be greatly increased and a degree of freedom in designing the housing box can be enhanced.

Claim 3 is characterized in that an engine is a V-type engine provided with a front cylinder and a rear cylinder.

As the engine is the V-type engine provided with the front cylinder and the rear cylinder, space between the front and rear cylinders can be effectively utilized. Therefore, larger space can be secured in front of the engine. An air intake system can be more easily arranged effectively utilizing such larger space.

Furthermore, the extension of the width of the body is inhibited by arranging two cylinder of the V-type engine longitudinally, the driving performance is enhanced and the low deck vehicle can be also made more advantageous in relation to the vibration of the engine.

Further the present invention relates to technique for improving the engine mounting structure of a low deck vehicle such as a scooter-type motorcycle or three-wheeled vehicle.

Technique related to relation between a footrest for a rider to put his/her foot and an engine in a motorcycle is known (for example, refer to (4) (JP-B-1-65778 (Figs. 1 to 3 on a first page)) and (5) (JP-A-2002-19673 (Fig. 1 on fifth to seventh pages and Fig. 5)).

According to the patent document (4), in a conventional type motorcycle (4), a part of the top face of an engine mounted in the center of the body functions as a footrest for a rider seated on a seat to put his/her foot.

According to the patent document (5), in a conventional type motorcycle (5), the side of a crankcase is exposed by mounting an engine the crankshaft of which is laterally extended in the center of the body, covering the engine and the body with a body cover and cutting out a part of the circumference of the crankcase of the engine out of the body cover, and a low deck (a footrest) for a rider seated on a seat to put his/her foot is arranged in front of the crankcase and on the right side and the left side of the crankcase.

However, in the conventional type motorcycle (4), a part of the top face of the engine merely functions as a footrest and area for putting the foot is extremely small. Therefore, improvement is required to more reduce the fatigue of a rider.

In the meantime, the conventional type motorcycle (5) is a low deck vehicle which is a scooter-type motorcycle where the right and left low decks are arranged in front of the crankcase. Therefore, the low deck cannot be extended at the back of the crankcase. The length of the low deck is reduced by the length of the crankcase. Therefore, a footrest for a passenger is separately provided at the back of the crankcase.

Then, the object of the invention is to provide technique for enabling lowering the height of a low deck in a low deck vehicle in which an engine is arranged below the low deck, enabling sufficiently securing the area for putting feet of the low deck and enabling providing a footrest for a rider and a footrest for a passenger on the low deck.

To achieve the object, a low deck vehicle is provided in which an engine is arranged below a low deck of the low deck vehicle such as a scooter-type motorcycle or three-wheeled vehicle and is characterized in that a part made opposite of the engine functions as a footrest for putting a foot of a rider by cutting out a part of the low deck and making a part of the engine opposite to the cut-out part.

As a part of the low deck is cut out and a part of the engine is made opposite to the cut-out part in the low deck vehicle in which the engine is arranged below the low deck, no clearance between the low deck and the engine is required to be provided under the low deck. The low deck can be lowered by the quantity. In addition, as a part of the engine made opposite to the cut-out part of the low deck also functions as a footrest for putting a rider's foot, area for putting the foot can be sufficiently secured. Hereby, room can be made in space under the rider's foot. Therefore, the fatigue of the rider can be reduced more. Further, not only a footrest for the rider but a footrest for a passenger can be provided on the low deck by extending the footrest for the rider backward.

Furthermore, the low deck can be lowered by the light and simple configuration. The engine can be also located in a higher position though the low deck is lowered and hereby, the operationability of the check and maintenance of the engine can be enhanced.

Preferably, a part of the engine made opposite to the cut-out part is a plane the top face of which is flat and the plane is set to the substantially equal level to the low deck.

As a part of the engine made opposite to the cut-out part is a plane at the substantially equal level to the low deck, a part of the engine opposite to the cut-out part can more effectively function as a part of a footrest on the low deck. A rider can put his/her foot freely on the low deck and on the engine opposite to the cut-out part. Therefore, the fatigue of the rider can be reduced more.

Preferably, a part of the engine is a cover covering an AC generator annexed to the engine.

The AC generator can be easily checked and maintained by detaching the cover.

Preferably, an opening for a check is made on the top face of the cover.

The AC generator can be more easily checked and maintained from the opening for a check.

Preferably, a floor mat at least covering the cut-out part is arranged on the top face of the low deck.

As the cut-out part is covered with the floor mat, the dust prevention effect of a part of the engine opposite to the cut-out part can be enhanced and the appearance quality of the low deck vehicle can be enhanced.

Further the present invention relates to technique for improving an engine cooling system of a low deck vehicle.

Technique for cooling an engine by a radiator in a low deck vehicle such as a scooter-type motorcycle or three-wheeled vehicle in which the body is covered with a body cover is known (for example, refer to (6) (JP-B-62-47756 (Figs. 1 and 2 on first and second pages)).

According to the patent document (6), as for an engine cooling system of a conventional type low deck vehicle, the body is covered with a body cover, a water-cooled engine is provided under a seat in the rear of the body, a radiator for the engine is provided immediately before a leg shield in the front of the body and an exhaust wind port for exhausting exhaust wind from the radiator backward is provided to the leg shield.

Exhaust wind exhausted from the exhaust wind port directly flows in a direction of the legs of a rider seated on the seat. When it is cold, the legs of the rider can be warmed by exhaust wind after heat exchanger by the radiator.

However, in the engine cooling system of the conventional type low deck vehicle, as distance between the radiator for the engine and the exhaust wind port is short, it is difficult to adjust a passage of exhaust wind.

Besides, as consideration for balancing the front weight and the rear weight of the low deck vehicle is required in case a large-sized and heavy engine such as a V-type engine is mounted in the rear of the low deck vehicle, there is room for improvement.

Furthermore, in case a radiator for an engine is arranged in the front of the body and the engine is arranged in the rear of the body, piping from the radiator to the engine is long and a degree of the freedom of piping is necessarily small. Therefore, to arrange the radiator in the front where cooling efficiency by running wind is high of the body, there is room for improvement.

Then, the object of the invention is to provide technique in which (1) the adjustment of a passage for optimizing the gas capacity and the temperature of exhaust wind of a radiator exhausted from an exhaust wind port is facilitated, (2) the balance in weight of a low deck vehicle mounting a heavy engine is enhanced and (3) piping from the radiator to the water-cooled engine is shortened and a degree of the freedom of the piping can be enhanced.

To achieve the object, a low deck vehicle is provided such as a scooter-type motorcycle or three-wheeled vehicle the body of which is covered with a body cover and is characterized in that right and left low decks for a rider seated on a seat to putting his/her feet are provided in front of the seat, a part for straddling at height at which the rider can straddle in sitting on the seat is provided between the right and left low decks, a water-cooled engine is provided under the part for straddling, the water-cooled engine is a longitudinal V-type engine provided with a front cylinder and a rear cylinder, a radiator for the engine is provided in the front inside the body cover and an exhaust wind port for exhausting exhaust wind from the radiator for the engine outside the body is provided on both right and left sides of the body cover and between the front cylinder and the rear cylinder.

As the radiator for the engine is provided in the front inside the body cover and the exhaust wind port for exhausting exhaust wind from the radiator for the engine outside the body is provided on both right and left sides of the body cover and between the front cylinder and the rear cylinder, exhaust wind after heat exchange by the radiator can cool the front and rear cylinders of the engine, flowing backward inside the body cover. Therefore, though the water-cooled engine is covered with the body cover, the temperature of the water-cooled engine can be stabilized.

As the part for straddling at height at which the rider can straddle in sitting on the seat is provided in front of the seat and between the right and left low decks and the water-cooled engine is provided under the part for straddling, the water-cooled engine can be arranged in the center of the body. In the meantime, as the radiator for the engine is provided in the front inside the body cover, the radiator can be arranged in the front where cooling efficiency by running wind is high of the body. Therefore, as the piping from the radiator to the water-cooled engine can be shortened, a degree of the freedom of the piping can be enhanced. In addition, as the water-cooled engine is arranged in the center of the body, balance between the front weight and the rear weight of the low deck vehicle can be more enhanced though the water-cooled engine is a large-sized and heavy engine such as a longitudinal V-type engine.

In addition, as the exhaust wind port is provided between the front cylinder and the rear cylinder and on both right and left sides of the body cover in the water-cooled engine arranged in the center of the body, distance between from the radiator for the engine arranged in the front inside the body cover to the exhaust wind port can be made relatively large. Besides, exhaust wind exhausted outside the body from the exhaust wind port can be mixed with running wind. Hereby, the adjustment of a passage for optimizing the gas capacity and the temperature of exhaust wind exhausted from the exhaust wind port is facilitated.

Preferably, a rear cylinder is opposite to a part for straddling and an exhaust wind port is an opening directed so that exhaust wind flows backward along the outside face of the part for straddling.

As the rear cylinder is opposite to the part for straddling, the rear cylinder can be efficiently cooled by exhaust wind flowing inside the part for straddling.

Further, as the exhaust wind port is directed so that exhaust wind flows backward along the outside face of the part for straddling, the legs of a rider can be efficiently warmed by exhaust wind after heat exchange by a radiator.

Preferably, a variable straightening vane the angle of which can be arbitrarily set is provided to an exhaust wind port.

As the variable straightening vane the angle of which can be arbitrarily set is provided to the exhaust wind port, the direction and the gas capacity of exhaust wind exhausted from the exhaust wind port can be arbitrarily adjusted by adjusting the angle of the variable straightening vane. Therefore, warmness around the legs can be adjusted by adjusting the direction and the gas capacity of exhaust wind flowing in a direction of the legs according to the choice of a rider.

Referring to the attached drawings, embodiments of the invention will be described below.
Fig. 1 is a left side view (No. 1) showing a low deck vehicle according to the invention;
Fig. 2 is a left side view (No. 2) showing the low deck vehicle according to the invention;
Fig. 3 is a plan showing the low deck vehicle according to the invention;
Fig. 4 is a left side view showing a body frame according to the invention;
Fig. 5 is a plan showing the body frame according to the invention;
Fig. 6 is a front view showing the body frame according to the invention;
Fig. 7 is a perspective view showing the body frame according to the invention viewed from the left side;
Fig. 8 is a perspective view showing the body frame according to the invention viewed from the right side;
Fig. 9 is a left side view showing the circumference of the body frame, a power unit, an air cleaner and a fuel tank according to the invention;
Fig. 10 is a sectional view showing the power unit according to the invention;
Fig. 11 is a sectional view showing a front half of the power unit according to the invention;
Fig. 12 is a sectional view showing a rear half of the power unit according to the invention;
Fig. 13 is a plan showing the circumference of the rear of the power unit and a swing arm for a rear wheel according to the invention;
Fig. 14 is a perspective view showing the circumference of the body frame and the power unit according to the invention viewed from left front;
Fig. 15 is a perspective view showing the circumference of the body frame, the power unit and the air cleaner according to the invention viewed from the left rear;
Fig. 16 is a perspective view showing the circumference of the body frame, the power unit and the air cleaner according to the invention viewed from the right front;
Fig. 17 is a perspective view showing the circumference of the body frame and the power unit according to the invention viewed from the right rear;
Fig. 18 is a left side view showing the circumference of the body frame, a V-type engine and an intake system according to the invention;
Fig. 19 is a back sectional view showing the circumference of the air cleaner and a body cover according to the invention;
Fig. 20 is an exploded view showing the air cleaner according to the invention;
Fig. 21 shows the action of the air cleaner according to the invention;
Fig. 22 is a left side view showing the circumference of the body frame, the power unit and an exhaust system according to the invention;
Fig. 23 is a plan showing the circumference of the body frame, the power unit and the exhaust system according to the invention;
Fig. 24 is a schematic drawing showing the low deck vehicle according to the invention;
Fig. 25 is a left side view showing the circumference of a housing box and a rear cushion for a rear wheel according to the invention;
Fig. 26 is a sectional view viewed along a line 26-26 in Fig. 25;
Fig. 27 shows a transformed example of the housing box according to the invention;
Fig. 28 is a schematic diagram showing a circulating system of liquid circulated to the engine according to the invention;
Figs. 29 show configuration around a front cover and a radiator according to the invention (No. 1);
Figs. 30 show configuration around the front cover and the radiator according to the invention (No. 2);
Figs. 31 show configuration around the front cover and the radiator according to the invention (No. 3);
Figs. 32 show configuration around the front cover and the radiator according to the invention (No. 4);
Fig. 33 is a piping drawing (No. 1) showing a stay and sending and return pipes of an engine cooling water circulating system according to the invention viewed from the right side;
Fig. 34 is a piping drawing (No. 2) showing a stay 320 and the sending and return pipes of the engine cooling water circulating system according to the invention viewed from the left side;
Fig. 35 is a sectional view showing a main part of a front fork and the stay according to the invention viewed from the front;
Fig. 36 is a piping drawing showing a stay and sending and return pipes of an engine cooling water circulating system (in a transformed example) according to the invention viewed from the right side;
Fig. 37 is a sectional view showing a main part of the front fork and a stay (in a transformed example) according to the invention viewed from the front;
Fig. 38 is a schematic diagram showing a circulating system (in a transformed example) of liquid circulated to the engine according to the invention;
Fig. 39 is a piping drawing (No. 1) showing the stay and sending and return pipes of an engine cooling water circulating system (in a transformed example) according to the invention viewed from the right side;
Fig. 40 is a piping drawing (No. 2) showing the stay and sending and return pipes of an engine cooling water circulating system (in a transformed example) according to the invention viewed from the left side;
Fig. 41 is a left side view showing the low deck vehicle in which an intake chamber for the engine (in a first transformed example) according to the invention is mounted;
Fig. 42 is a plan showing the intake chamber for the engine (in the first transformed example) according to the invention;
Fig. 43 is a front view showing the intake chamber for the engine (in the first transformed example) according to the invention;
Fig. 44 is a left side view showing the low deck vehicle in which an intake chamber for the engine (in a second transformed example) according to the invention is mounted;
Figs. 45 show the configuration of the circumference of a low deck according to the invention;
Fig. 46 is a right side view showing the low deck vehicle in a state in which a muffler according to the invention is fixed;
Fig. 47 is a right side view showing a state in which the muffler according to the invention is fixed;
Fig. 48 is a top sectional view showing structure for attaching a muffler stay to a transmission unit according to the invention;
Fig. 49 shows a transformed example of structure for fixing the muffler according to the invention;
Fig. 50 is a left side view showing an engine cooling system according to the invention;
Fig. 51 is a top sectional view showing the engine cooling system according to the invention; and
Figs. 52 show the configuration of an exhaust wind port and a straightening vane according to the invention.

In the following description, the front, the rear, the left, the right, the upside and the downside comply with a direction viewed from a rider, in the drawings, "Fr" denotes the front side, "Rr" denotes the rear side, "L" denotes the left side, "R" denotes the right side and "CL" denotes the center of the width of the body (the center of the body). The drawings shall be viewed in a direction of reference numbers.

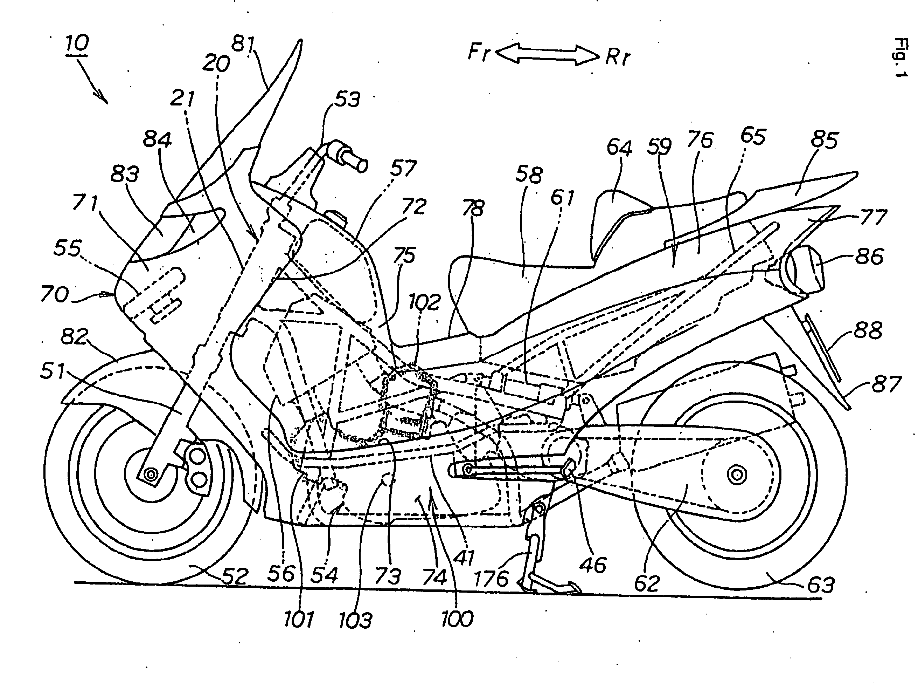

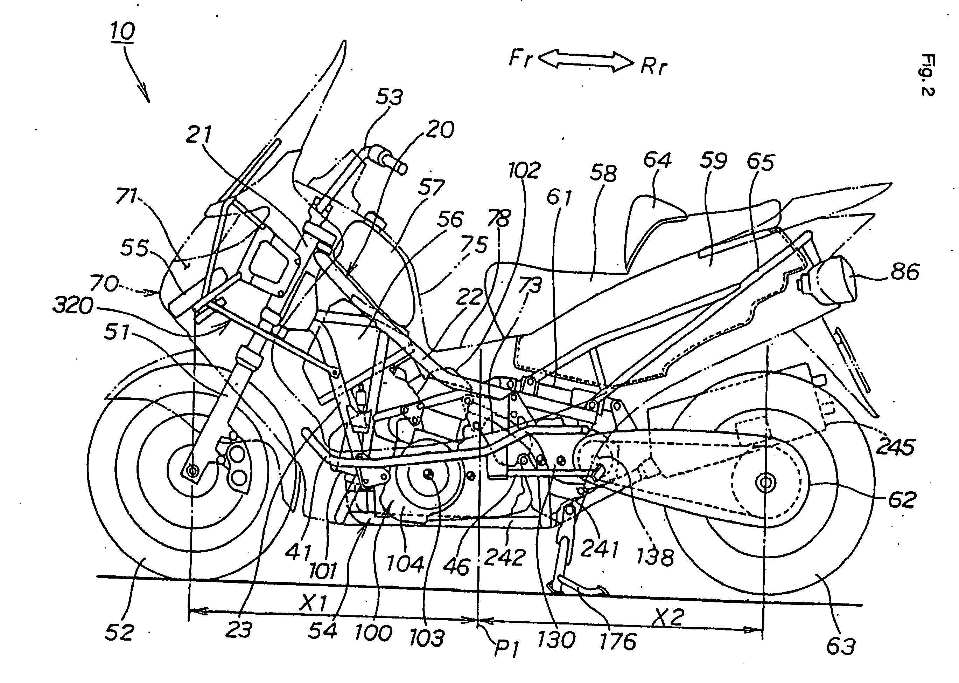

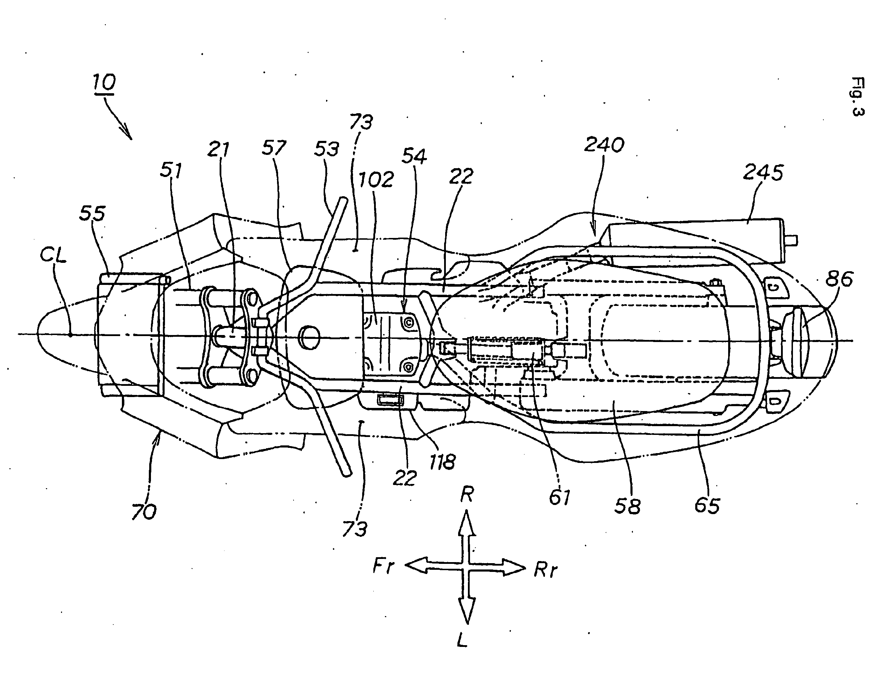

First, the whole configuration of a low deck vehicle 10 will be described. Fig. 1 is a side view (No. 1) showing the left side of the low deck vehicle according to the invention and shows a state in which a body cover is attached. Fig. 2 is a side view (No. 2) showing the left side of the low deck vehicle according to the invention and shows a state in which the body cover is detached. Fig. 3 is a plan showing the low deck vehicle according to the invention and shows a state in which the body cover is detached.

The low deck vehicle 10 is mainly composed of a body frame 20, a front fork 51 attached to a head pipe 21 of the body frame 20, a front wheel 52 attached to the front fork 51, a handlebar 53 coupled to the front fork 51, a power unit 54 attached to the downside of the body frame 20, a radiator 55 attached to a front upper part of the body frame 20, an air cleaner 56 and a fuel tank 57, a seat 58 attached to a rear upper part of the body frame 20, a housing box 59 attached to the rear of the body frame 20 under the seat 58, a swing arm 62 suspended from the rear of the body frame 20 via a rear cushion for a rear wheel 61 and the rear wheel 63 attached to the swing arm 62, and is a full cowling type vehicle the whole body of which is covered with a body cover (cowl) 70.

More concretely, the seat 58 is a tandem seat on which two persons can sit longitudinally and is provided with a movable (adjustable) seat back 64 for a rider in the center. Such a seat 58 can be attached to the body frame 20 via a seat rail 65 extended backward from the rear upper part of the body frame 20.

"P1" denotes an intermediate position of a wheel base (center distance between the front wheel 52 and the rear wheel 63), and distance X1 and distance X2 are equal.

The body cover 70 is composed of a front cover 71 covering the front and the head pipe 21 and an upper part of the front wheel 52, an inner cover 72 covering the rear of the front cover 71, right and left low decks 73 as a step floor for putting a foot of the rider (only the left one is shown. The following are the same), right and left floor skirts 74 extended downward from each outer edge of these low decks 72, a center cover 75 extended from the inner cover 72 backward and covering the longitudinal center of the body frame 20, a side cover 76 extended from the center cover 75 backward and covering the rear of the body frame 20, the seat rail 65 and the housing box 59 and a rear cover 77 covering a rear upper part of the body at the back of the side cover 76 as shown in Fig. 1.

Fig. 2 shows that the front cover 71 covering the front of the body frame 20 and the radiator 55 for an engine are supported by the body frame 20 via a stay 320.

The center cover 75 is a member also covering the air cleaner 56, the fuel tank 57 and the engine 100.

In the drawings, a reference number 81 denotes a wind screen, 82 denotes a front fender, 83 denotes a head lamp, 84 denotes a winker, 85 denotes a rear spoiler that also functions as a rear grip, 86 denotes a tail lamp, 87 denotes a rear fender and 88 denotes a number plate.

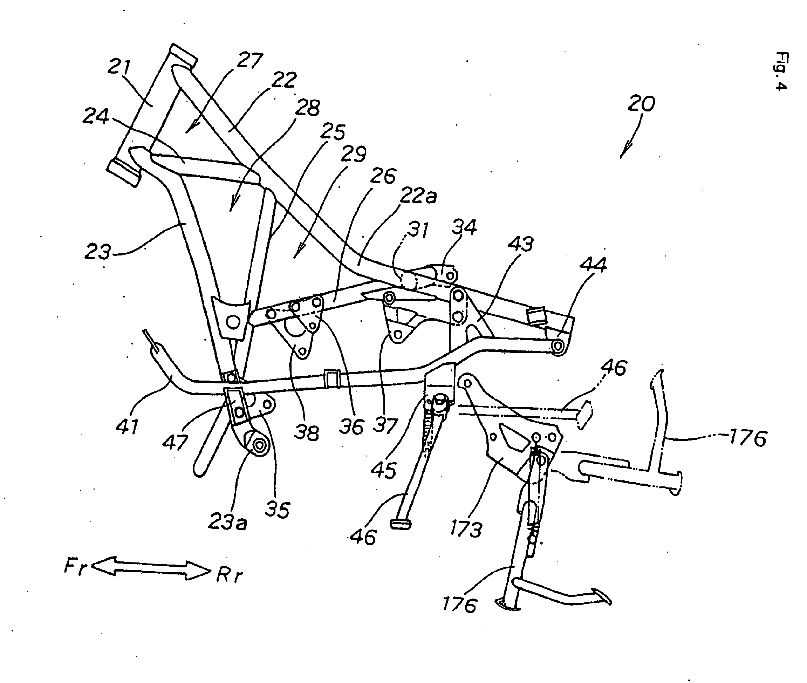

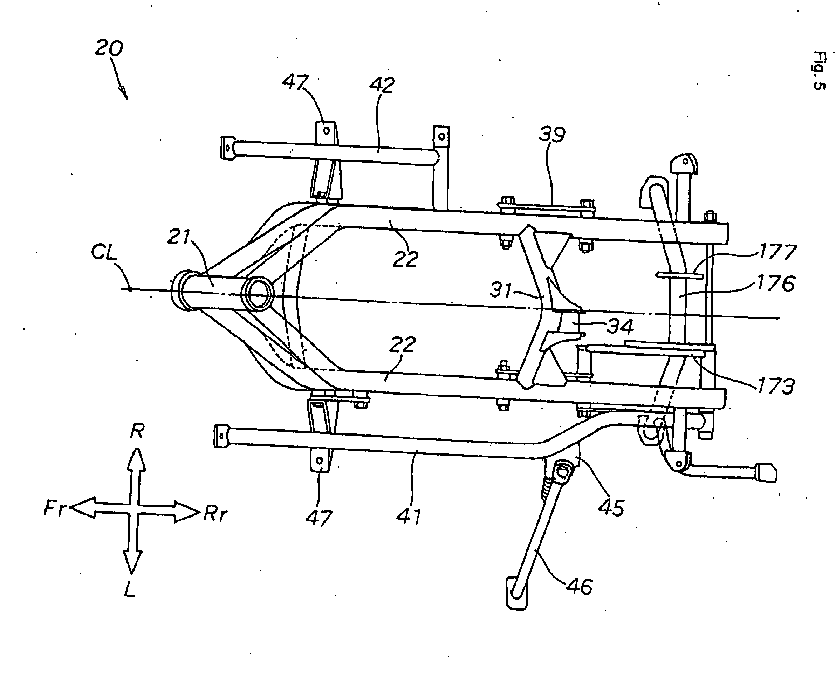

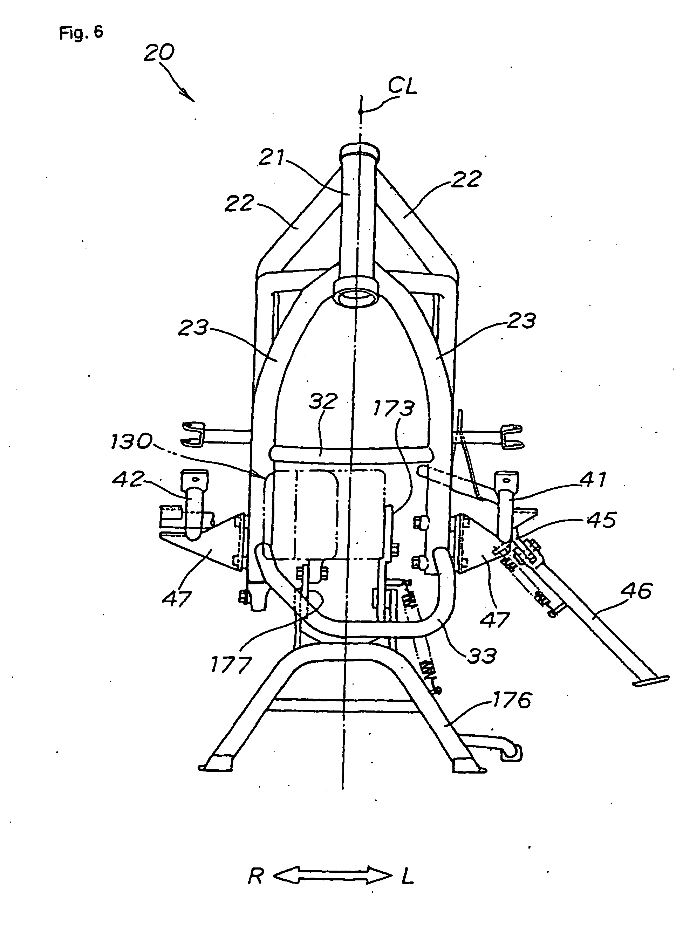

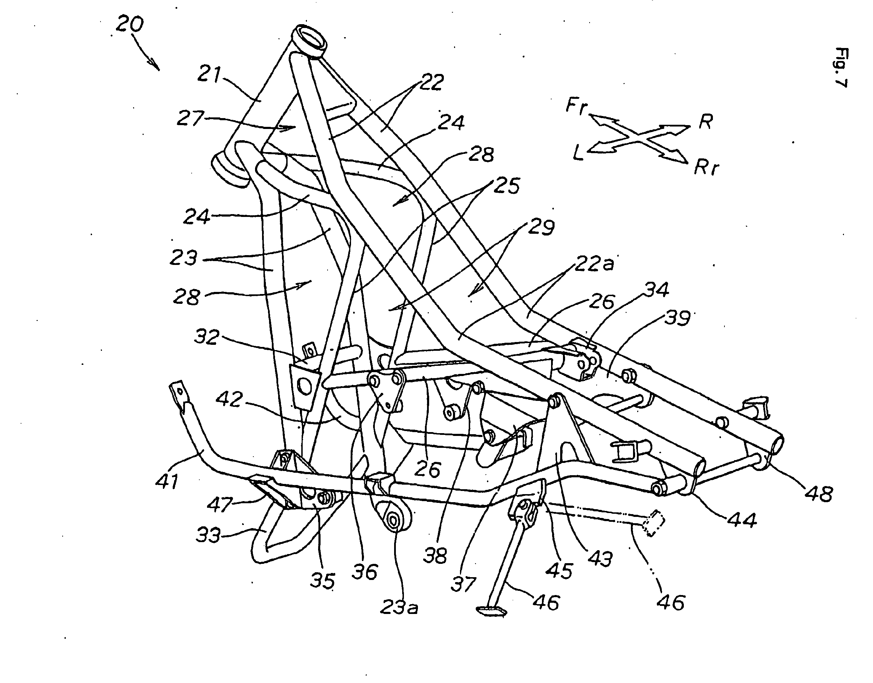

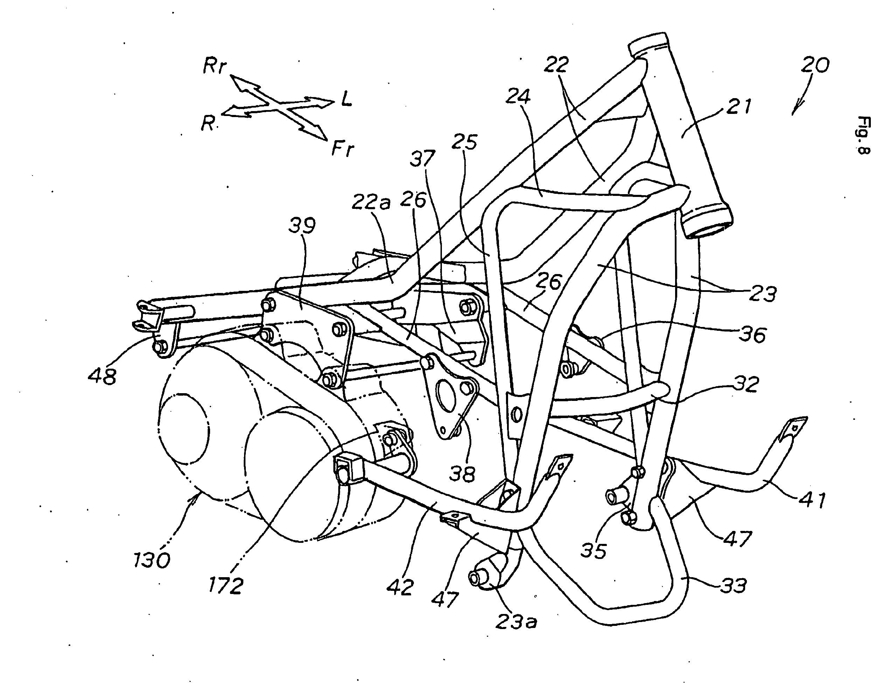

Next, the body frame 20 will be described. Fig. 4 is a side view showing the left side of the body frame according to the invention, Fig. 5 is a plan showing the body frame according to the invention, Fig. 6 is a front view showing the body frame according to the invention, Fig. 7 is a perspective view acquired by viewing the body frame according to the invention from the left side and Fig. 8 is a perspective view acquired by viewing the body frame according to the invention from the right side.

The body frame 20 is a diamond frame which is composed of a pair of right and left upper frames 22, 22 extended backward and downward from the head pipe 21 and a pair of right and left down frames 23, 23 extended downward from the head pipe 21 and coupled to the front of a crankcase 104 of the V-type engine 100 (see Fig. 2) and from which the V-type engine 100 is suspended.

To explain more detailedly, the upper frames 22, 22 are pipes extended substantially linearly, being inclined backward and downward from an upper part of the head pipe 21 and extended further backward and downward in a state in which a degree of the inclination is relieved from the downward inclined end 22a. The down frames 23, 23 are pipes extended backward and downward from a lower part of the head pipe 21 at a larger inclination than that of the upper frames 22, 22.

The left upper frame 22 and the left down frame 23, and the right upper frame 22 and the right down frame 23 respectively form framed truss structure (triangular framed structure).

To explain concretely, the framed truss structure is provided with three spaces 27 to 29 in a triangular shape when the spaces are viewed from the side by extending a substantially horizontal first stiffener 24 from a part in which the head pipe 21 and the down frame 23 are bonded toward the upper frame 22, extending and bonding a second stiffener 25 from a part in which the upper frame 22 and the first stiffener 24 are bonded to the lower end of the down frame 23 and further, putting a third stiffener 26 between the vicinity of the downward inclined end 22a of the upper frame 22 and a part on the way of the second stiffener 25. These spaces 27 to 29 are through in a direction of the width of the body.

That is, the first space 27 is formed by the head pipe 21, the upper frame 22 and the first stiffener 24. The second space 28 is formed by the down frame 23, the first and second stiffeners 24, 25. The third space 29 is formed by the upper frame 22, the second and third stiffeners 25, 26.

Further, the body frame 20 secures rigidity by putting a cross member 31 between the right and left upper frames 22, 22 in the vicinity of the downward inclined end 22a of each upper frame 22 and putting two cross members 32, 33 between intermediate parts of the right and left down frames 23, 23 and between the lower ends. The cross member 31 between the right and left upper frames 22, 22 is provided with a bracket for a cushion 34.

The body frame 20 is provided with a left first hanger plate 35 at the lower end of the left down frame 23, is provided with a left second hanger plate 36 on the left third stiffener 26, is provided with a left third hanger plate 37 in the vicinity of a part in which the left upper frame 22 and the left third stiffener 26 are bonded, is provided with a left fourth hanger plate 44 at the rear end of the left upper frame 22, is provided with a right hanger 23a at the lower end of the right down frame 23 as shown in Fig. 8, is provided with a right first hanger plate 38 on the right third stiffener 26, is provided with a right second hanger plate 39 in the vicinity of a part in which the right upper frame 22 and the right third stiffener 26 are bonded, and is provided with a right third hanger plate 48 at the rear end of the right upper frame 22.

These hanger plates 35 to 39, 44, 48 are coupling members which can be detached from the body frame 20.

Further, right and left low deck supporting frames 41, 42 are fixed to the body frame 20 via stays 47, 47 below the down frames 23, 23 as shown in Fig. 5 and 8. These right and left low deck supporting frames 41, 42 are members extended longitudinally for supporting the low deck 73 (see Fig. 1).

The left low deck supporting frame 41 is a pipe the rear of which is coupled to the rear of the left upper frame 22 via a stay 43 and the left fourth hanger plate 44 and integrally holds a side stand 46 in the rear. The left fourth hanger plate 44 also functions as a stay for the low deck supporting frame.

Detailedly, the side stand 46 is attached to the left low deck supporting frame 41 via a bracket 45 so that the side stand can stand and can be housed. As shown in Fig. 8, the right low deck supporting frame 42 is coupled to a bracket 172 of a transmission unit 130 the rear of which is shown by an imaginary line.

Structure in which the above-mentioned low deck supporting frames 41, 42 are attached will be collectively described below.

The low deck supporting frames 41, 42 extended longitudinally are fixed to each low part of the down frames 23, 23 which respectively form the diamond frame and the low decks 73 (see Fig. 1) are supported by these low deck supporting frames 41, 42. Therefore, the V-type engine 100 (see Fig. 2) can be hung and the low decks can be securely supported.

Further, the rear of the left low deck supporting frame 41 fixed to the lower part of the left down frame 23 is also coupled to the rear of the left upper frame 22 (see Figs. 2 and 7). Therefore, the left low deck supporting frame 41 long longitudinally can be sufficiently fixed by the body frame 20. As a result, the rigidity of the low deck supporting frame 41 can be enhanced, the low deck 73 can be more securely supported, and the supporting rigidity can be more enhanced.

In the meantime, as shown in Fig. 8, the rear of the right low deck supporting frame 42 fixed to a lower part of the right down frame 23 is further coupled to the rigid transmission unit 130. Therefore, the right low deck supporting frame 42 long longitudinally can be sufficiently fixed by the body frame 20 and the transmission unit 130. As a result, the rigidity of the low deck supporting frame 42 can be enhanced, the low deck 73 can be more securely supported, and the supporting rigidity can be more enhanced.

Furthermore, as shown in Fig. 4, as the side stand 46 is integrally held in the rear of the left low deck supporting frame 41, the low deck supporting frame 41 can also function as a holder of the side stand 46. Therefore, the low deck supporting frame can also function as another functional part, the bracket 45 for holding the side stand 46 can be miniaturized, and no holding part formed by another part is required to be provided. In addition, as the side stand 46 is held by the low deck supporting frame 41 extended longitudinally, the side stand 46 can be set in an arbitrary position in a longitudinal direction, and a degree of the freedom of design is enhanced.

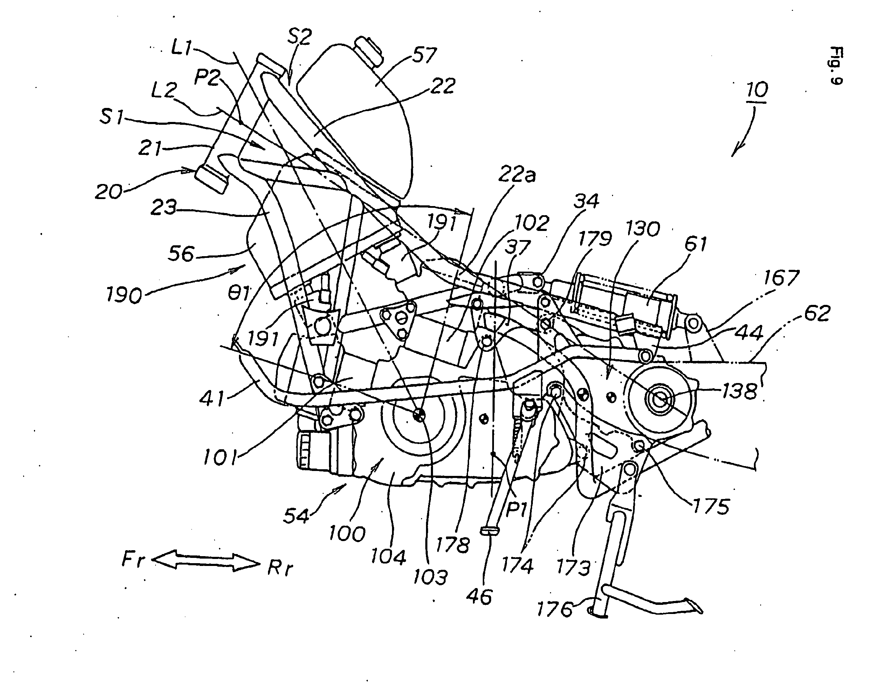

Next, the configuration of the circumference of the power unit 54 will be described. Fig. 9 is a left side view showing the circumferences of the body frame according to the invention, the power unit, the air cleaner and the fuel tank.

The power unit 54 is acquired by combining the front longitudinal V-type engine 100 and the rear transmission unit 130. That is, the transmission unit 130 is provided to the power unit 54 (The transmission unit 130 is provided to the rear of the V-type engine 100.).

As shown in Fig. 9, the V-type engine 100 is a 2-cylinder engine the banking angle θ1 (an angle θ1 between cylinders 101, 102) of which is set to substantially 90 ° or an angle exceeding 90 ° when the V-type engine is viewed from the side. In the V-type engine 100, the cylinder 101 equivalent to a front bank, that is, the front cylinder 101 is extended substantially horizontally forward toward the upside of the axle of the front wheel 52 (see Fig. 2). The cylinder 102 equivalent to a rear bank, that is, the rear cylinder 102 is extended substantially vertically upward toward the downward inclined end 22a of the upper frame 22. The invention is characterized in that the V-type engine is arranged in a state in which a bisector L1 of the banking angle θ1 is directed toward the head pipe 21 as described above.

Further, Fig. 9 shows that the cylinder 101 equivalent to the front bank is arranged in front of the right and left down frames 23, 23 and the cylinder 102 equivalent to the rear bank is arranged between the right and left upper frames 22, 22 (see Fig. 3, too) by arranging a crankshaft 103 of the V-type engine 100 in front of an intermediate position P1 (see Fig. 2) of a wheel base.

The V-type engine 100 can be arranged in front possibly by arranging the cylinder 101 equivalent to the front bank in front of the right and left down frames 23, 23. As a result, as the center of the gravity of the low deck vehicle 10 can be set in front, a load applied to the front wheel 52 and the rear wheel 63 (see Fig. 2) can be distributed more properly.

Further, the position of the crankshaft 103 of the V-type engine 100 is shifted forward by arranging the cylinder 101 equivalent to the front bank in front. In this case, the bisector L1 of the banking angle θ1 is also directed toward the head pipe 21. As the bisector L1 of the banking angle θ1 rises by quantity in which the position of the crankshaft 103 is shifted in front, the cylinder 102 equivalent to the rear bank is accordingly inclined backward in the body. Therefore, the height of the cylinder 102 equivalent to the rear bank can be lowered. Therefore, a degree of freedom in mounting the V-type engine 100 is more enhanced.

Furthermore, as the cylinder 102 equivalent to the rear bank is arranged between the right and left upper frames 22, 22, lowering the upper frames 22, 22 does not interfere with the cylinder 102 equivalent to the rear bank. Therefore, the upper frames 22, 22 can be passed in as low positions as possible. Therefore, as the center of the gravity of the body frame 20 is lowered, that of the low deck vehicle 10 can be lowered. In addition, as the low deck 73 (see Fig. 1) can be more lowered, the comfort of the low deck vehicle 10 and the comfort of the feet of a rider on it are enhanced. Further, the rider can more easily stride the body frame 20 by lowering the upper frames 22, 22 when the rider rides.

To enable arranging the V-type engine 100 in front, the radiator 55 for the engine (the water-cooled engine) 100 is arranged in front of the head pipe 21 as shown in Fig. 2. The V-type engine 100 can be arranged in front possibly by shifting the radiator 55 which is arranged before the water-cooled engine in a conventional type in front of the head pipe 21.

The V-type engine 100 and the transmission unit 130 are arranged so that a lower half is located below the low deck supporting frames 41, 42 (only the left one is shown in the drawing). Therefore, the V-type engine 100 and the transmission unit 130 are mounted in the low deck vehicle 10 in a state in which they are arranged below the low decks 73 (see Fig. 1) supported by the low deck supporting frames 41, 42 from the downside. The crankshaft 103 is located below the low decks 73 and the low deck supporting frames 41, 42.

As a result, the V-type engine 100 and an air intake system 190 are arranged in space S1 below a straight line L2 passing a point P2 in the center in height of the head pipe 21 and the final output shaft 138 of the transmission unit 130. In addition, the bisector L1 of the banking angle θ1 can be directed toward the head pipe 21.

The air intake system 190 is a system for supplying air for combustion to the V-type engine 100 and includes the air cleaner 56 and each intake coupling pipe 191, 191 for connecting the air cleaner 56 to each cylinder 101, 102.

A fact that the V-type engine 100 is arranged in a state in which the bisector L1 of the banking angle 91 is directed toward the head pipe 21 means that the bisector L1 is directed toward a direction in which the rigidity of the body is strong, the vibration of the V-type engine 100 can be made more profitable, space between the head pipe 21 and the two cylinders can be effectively used, and large space for arranging the intake coupling pipes 191, 191 for each cylinder 101, 102 and the air intake system 190 including the air cleaner 56 can be secured. Therefore, a degree of the freedom of the air intake system 190 is enhanced.

As the intake coupling pipes 191, 191 and the air intake system 190 including the air cleaner 56 are arranged in large space between V-type banks with them directed toward the head pipe 21, the air intake system 190 and the V-type engine 100 can be efficiently coupled and the performance of the V-type engine 100 can be enhanced. Besides, the air intake system 190 can be miniaturized in a relatively low position and can be made compact. Therefore, the fuel tank 57 is easily arranged over the low air intake system 190 and mass can be centralized in the front.

As the center of the gravity of the low deck vehicle 10 can be set in front by arranging the fuel tank 57 in the front of the low deck vehicle 10, a load applied to the front wheel 52 and the rear wheel 63 can be more properly distributed. In addition, as the fuel tank 57 is not required to be arranged under the seat 58 (see Fig. 2), large effect that large space is secured under the seat 58 and the housing box 59 (see Fig. 2) having large housing space is arranged is arranged is produced.

Furthermore, as the V-type engine 100 and the air intake system 190 are arranged in the space S1 below the straight line L2 passing the head pipe 21 and the final output shaft 138 of the transmission unit 130, space S2 above the air cleaner 56 can be effectively utilized. Therefore, the fuel tank 57 as a functional part can be easily arranged above the air cleaner 56.

In the embodiment shown in Fig. 9, though the end of the cylinder 102 equivalent to the rear bank and the upper end of the air cleaner 56 of the air intake system 190 are protruded slightly upward from the straight line L2, they are in a range substantially equivalent to a border line on each upside of the upper frames 22, 22, and the cylinder 102 and the air cleaner 56 can be substantially regarded as arranged in the space S1 below the straight line L2 passing the head pipe 21 and the final output shaft 138.

Referring the Figs. 1 to 3 and 9, relation among the seat 58, the low decks 73, 73, the center cover 75 and the engine 100 will be described below.

The center cover 75 out of the body cover 70 is integrated with a part for straddling 78 at height at which a rider can straddle when he/she rides between the right and left low decks 73, 73. The part for straddling 78 is a substantially downward U-shaped cover when the part for straddling is viewed from the front covering the center in a longitudinal direction of the body frame 20, that is, the circumference of the downward inclined end 22a (see Fig. 9) of the upper frame 22 and the circumference of the rear cylinder 102 in the V-type engine 100.

As shown in Figs. 1 and 2, the low deck vehicle 10 is a scooter in which the housing space is provided under the seat 58 (that is, the housing box 59 is provided), the right and left low decks 73, 73 for a rider seated on the seat 58 to put his/her feet are provided in front of the seat 58, the part for straddling 78 is provided between these right and left low decks 73, 73, the engine 100 is provided under the part for straddling 78 and the fuel tank 57 is arranged in front of the part for straddling 78.

As the crankshaft 103 of the engine 100 is arranged under the part for straddling 78, that is, below the low decks 73, 73 and the summit of the cylinder (the rear cylinder 102) of the engine 100 is opposite to the part for straddling 78, large space can be secured in front of the engine 100. The intake coupling pipe 191, 191 can be made in a relatively simple shape near to a straight line by effectively utilizing the space and arranging the air intake system 190 including the intake coupling pipes 191, 191 and the air cleaner 56. Therefore, the air intake system 190 and the V-type engine 100 can be efficiently coupled and the performance of the engine 100 can be enhanced. Further, a degree of freedom in designing the air intake system 190 is enhanced.

Furthermore, another space in relatively low position can be secured above the air cleaner 56 by arranging the air cleaner 56 in a relatively low position in front of the engine 100. A functional part such as the fuel tank 57 can be easily arranged effectively utilizing another space.

Besides, as the fuel tank 57 is not required to be arranged under the seat 58 by arranging the fuel tank 57 in front of the part for straddling 78, large space under the seat 58 is secured, the capacity of the housing box 59 can be greatly increased and a degree of freedom in designing the housing box 59 can be enhanced.

Besides, as the engine 100 is formed by the V-type engine provided with the front cylinder 101 and the rear cylinder 102, space between the front and rear cylinders 101, 102 can be effectively utilized. Therefore, larger space can be secured in front of the engine 100. The air intake system 190 can be more easily arranged effectively utilizing the above-mentioned large space.

Furthermore, the width of the body is prevented from being increased by arranging the two cylinders 101, 102 of the V-type engine 100 in the longitudinal direction, the driving performance is enhanced and the vibration of the V-type engine 100 can be made more profitable.

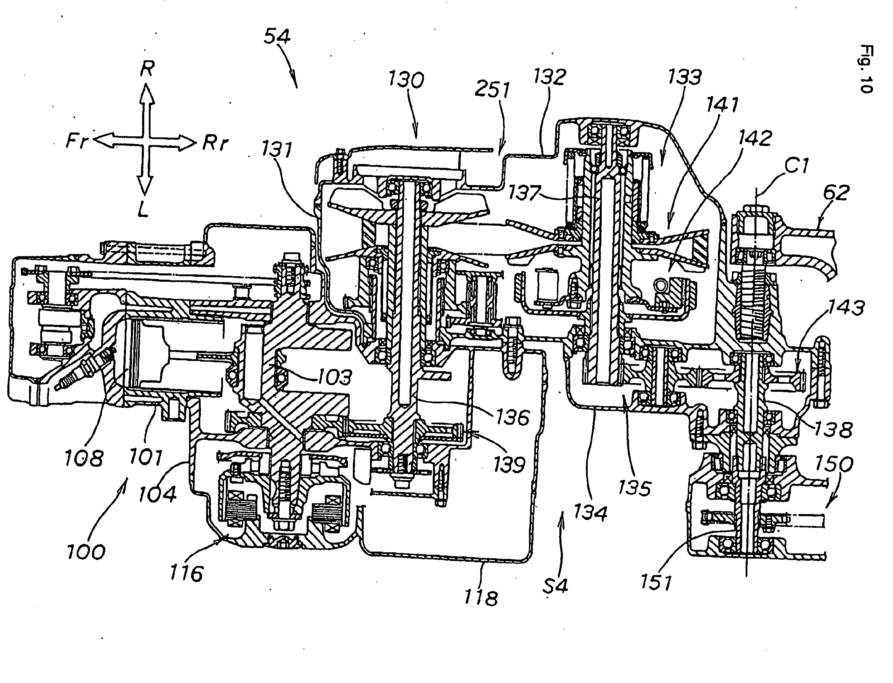

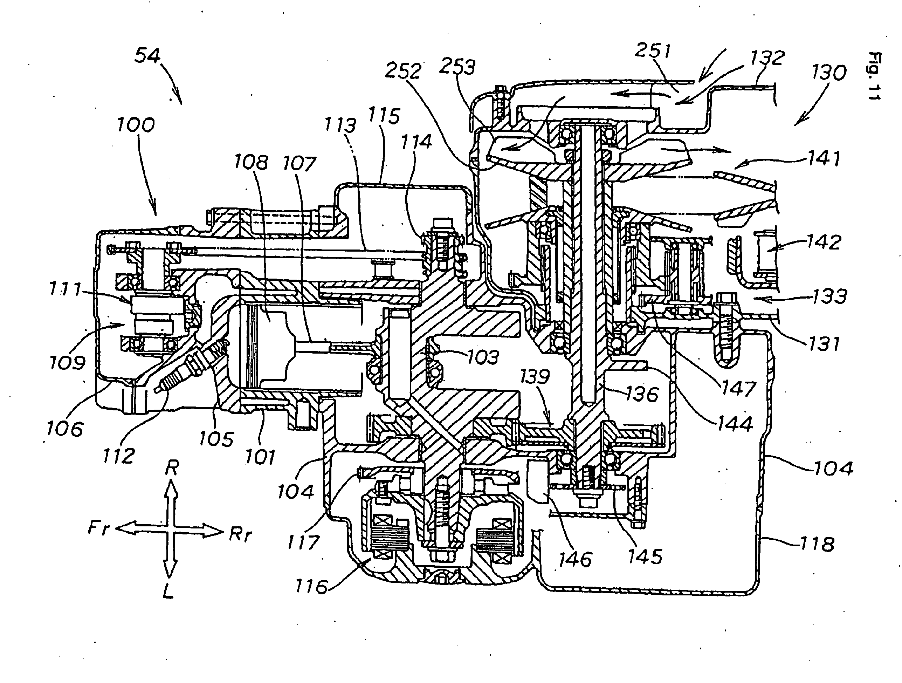

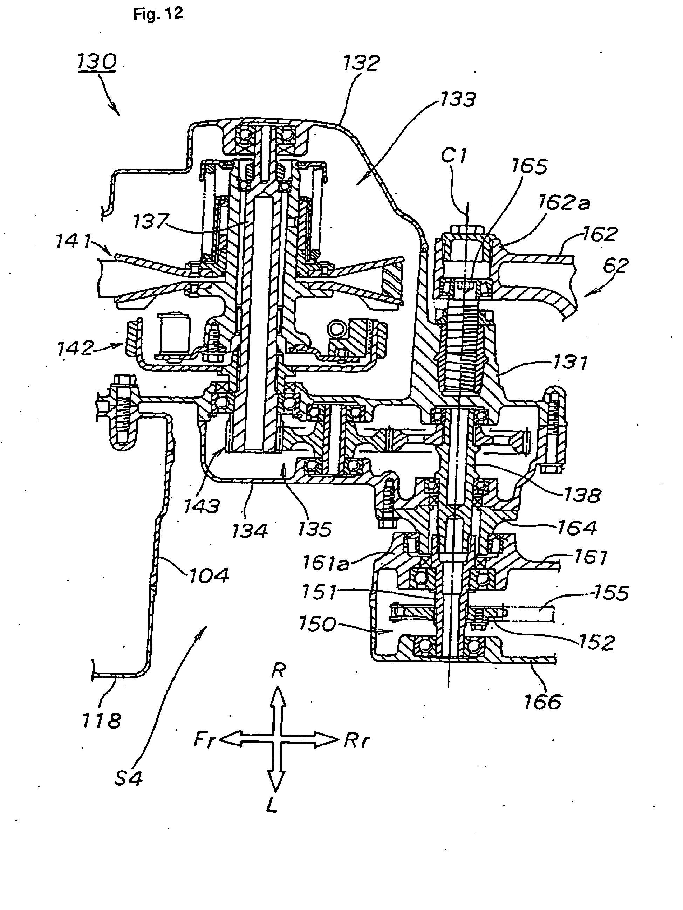

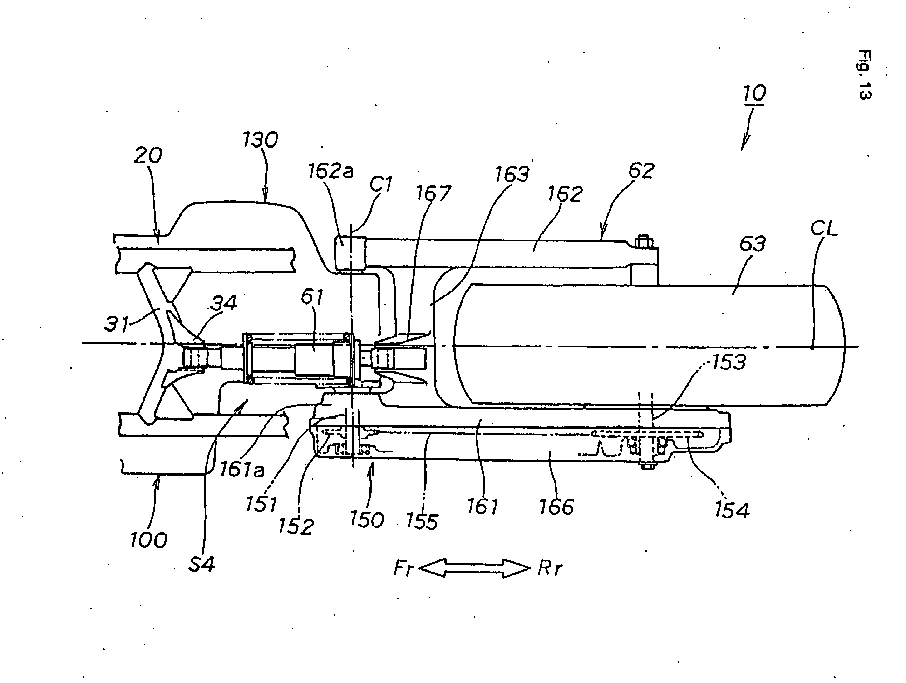

Fig. 10 is a sectional view showing the power unit according to the invention and the power unit 54 viewed from the top is shown as developed sectional structure. Fig. 11 is a sectional view showing a front half of the power unit according to the invention. Fig. 12 is a sectional view showing a rear half of the power unit according to the invention. Fig. 13 is a plan showing the rear of the power unit according to the invention and the circumference of the swing arm for the rear wheel.

Figs. 10 to 12 show the sectional configuration of the power unit 54. As for the V-type engine 100, the cylinder 102 equivalent to the rear bank is omitted.

The V-type engine 100 is a water-cooled engine composed of a crankcase 104 divided in right and left two, the cylinder 101 equivalent to the front bank and the cylinder 102 equivalent to the rear bank (see Fig. 9) respectively coupled to the crankcase 104, a head 105 coupled to each end of these cylinders 101, 102 and a head cover 106, the crankshaft 103 extended in the direction of the width of the body and housed in the crankcase 104 so that the crankshaft can be rotated, a piston 108 coupled to the crankshaft 103 via a connecting rod 107, a valve train 111 housed in a cam chamber 109 and an ignition plug 112 and provided with a water jacket.

In the drawings, a reference number 113 denotes a cam chain, 114 denotes a driving gear for a cooling water pump, 115 denotes a right side cover, 116 denotes an alternator, and 117 denotes a gear for driving the crankshaft by a starter motor (described later).

Each circumference of the left end of the crankshaft 103, the AC generator 116 and the left end of a first transmission shaft 136 described later is largely covered by covering the left side of the crankcase 104 with a left side cover 118.

The transmission unit 130 is connected to the engine 100 on one side (on the right side R) of the V-type engine 100, is extended backward on one side (on the right side R) of the low deck vehicle 10 and drives the rear wheel 63 from the other side (the left side L) of the low deck vehicle 10 at the pivot of the swing arm 62 for the rear wheel.

Hereby, the crankcase 104 and the transmission unit 130 are combined in a substantially U-shape when they are viewed from the top to be the power unit 54, and a substantially U-shaped opening when it is viewed from the top (space S4 in the substantially U-shaped opening when it is viewed from the top) can be provided to the other side (the left side L) of the low deck vehicle 10.

A change in only the V-type engine 100 or only the transmission unit 130 is enabled by such configuration to be the flexible power unit 54.

To explain in detail, the transmission unit 130 is composed of a main case 131 attached to the right side of the rear of the crankcase 104 and extended backward, a first cover 132 closing the opening on the right side of the main case 131, a first transmission chamber 133 formed by the main case 131 and the first cover 132, a deputy case 134 overlapped with the left side of the rear of the main case 131, a second transmission chamber 135 formed by the main case 131 and the deputy case 134, a first transmission shaft 136 extended from the rear of the crankcase 104 into the first transmission chamber 133 in the direction of the width of the body, a second transmission shaft 137 extended from the rear of the first transmission chamber 133 into the second transmission chamber 135 in the direction of the width of the body, the final output shaft 138 extended from the second transmission chamber 135 to the left outside through the deputy case 134, a first gear train 139 that transmits motive power from the left end of the crankshaft 103 to the left end of the first transmission shaft 136, a belt-type continuously variable transmission gear 141 and a centrifugal clutch 142 that transmit motive power from the right end of the first transmission shaft 136 to the right end of the second transmission shaft 137 and a second gear train 143 that transmit motive power from the left end of the second transmission shaft 137 to the final output shaft 138.

As for the belt-type continuously variable transmission gear 141, a motor control method in which the shift of gear ratio via a gear for a shift 147 is controlled by a servo motor not shown is adopted.

A reference number 144 denotes a balancer, 145 denotes a reluctor, 146 denotes a pulser (an angle sensor of the crankshaft) and the pulser is used for controlling the ignition of the engine 100 and fuel injection.

Further to explain referring to Fig. 13, the motive power of the V-type engine 100 can be transmitted from the transmission unit 130 to the rear wheel 63 via a chain drive mechanism 150 by connecting a transmission shaft 151 to the left end of the final output shaft 138 via splines, attaching a driving sprocket 152 to the transmission shaft 151, in the meantime, attaching a driven sprocket 154 to an axle 153 for the rear wheel 63 and winding a chain 155 between these driving and driven sprockets 152, 154.

The center C1 of the final output shaft 138 also functions as the pivot C1 of the swing arm 62 for the rear wheel (the center C1 of a swing).

The swing arm 62 is a substantially H-type member when the swing arm is viewed from the top composed of a left arm 161, a right arm 162 and a cross member 163 connecting the left and right arms 161, 162, and the swing arm can support the rear wheel 63 at the rear end so that the rear wheel can be rotated.

Such a swing arm 62 is arranged so that the rear right side of the main case 131 and the rear left side of the deputy case 134 are held between the front ends of the left and right arms 161, 162. The swing arm 62 can be attached by supporting a left supported part 161 a provided to the front end of the left arm 161 on the rear left side of the deputy case 134 by a left pivot 164 and supporting a right supported part 162a provided to the front end of a right arm 162 on the rear right side of the main case 131 by a right pivot 165 so that the swing arm 62 can be vertically swung.

The pivot 165 is a male screw screwed on the main case 131 so that the pivot can be unscrewed. The right supported part 162a can be attached to the main case 131 by pulling the pivot 165 into the main case 131 beforehand by screwing the pivot 165 and fitting the pivot to the right supported part 162a with the end of the pivot 165 exposed after the swing arm 62 is aligned with the center C1 of the pivot.

The left arm 161 also functions as a chain case, and the driving and driven sprockets 152, 154 and the chain 155 can be housed by covering a left opening of the left arm 161 with a chain cover 166.

As clear from the above-mentioned description, the power unit 54 can be provided with a substantially U-shaped opening when the opening is viewed from the top enclosed by the rear end of the crankcase 104, the left sides of the main and deputy cases 131, 134 of the transmission unit 130 and the front end of the left arm 161 of the swing arm 62 on the other side (the left side L) of the low deck vehicle 10.

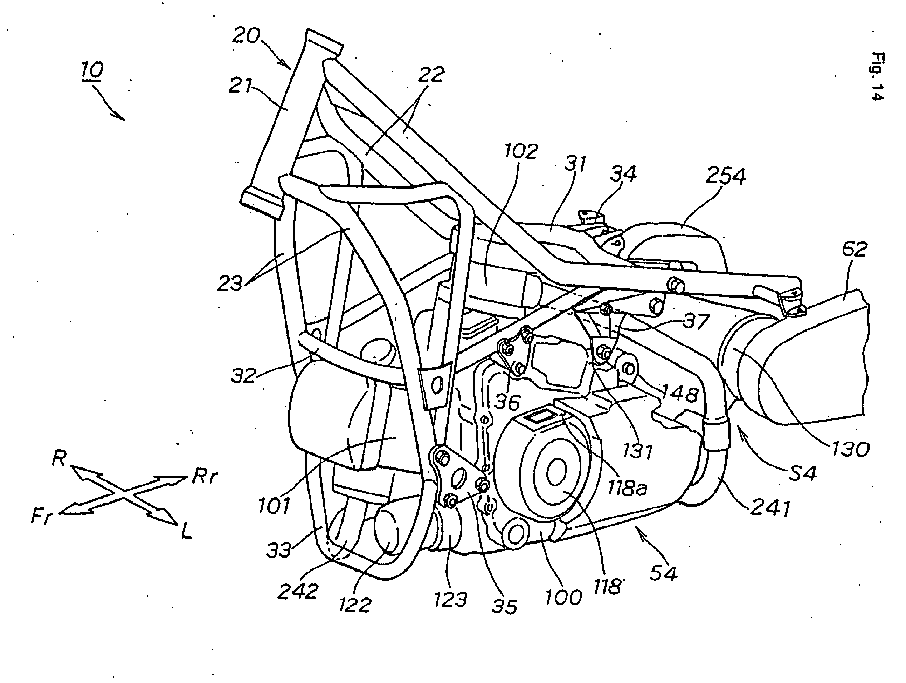

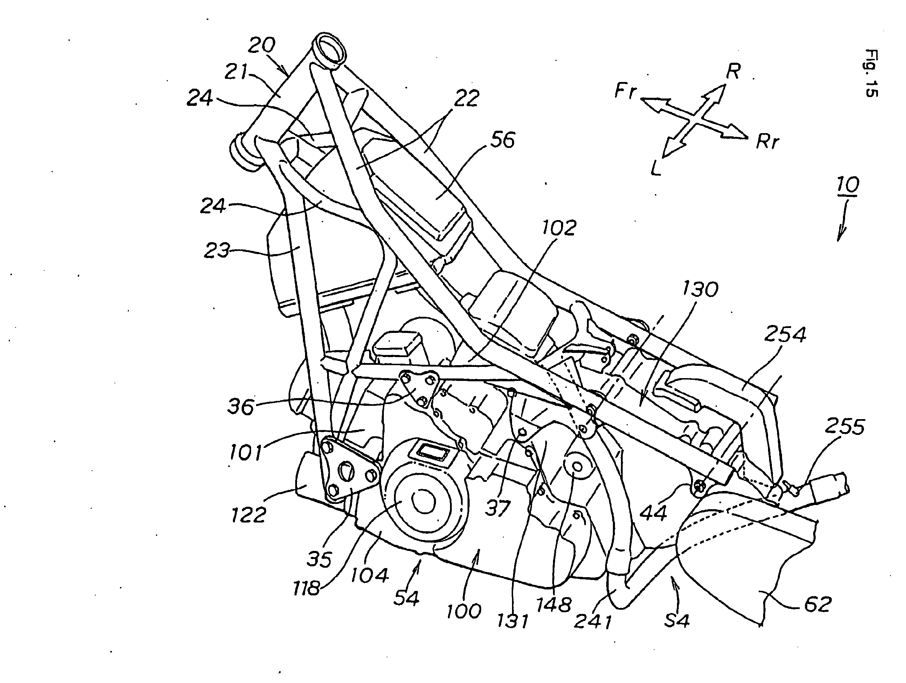

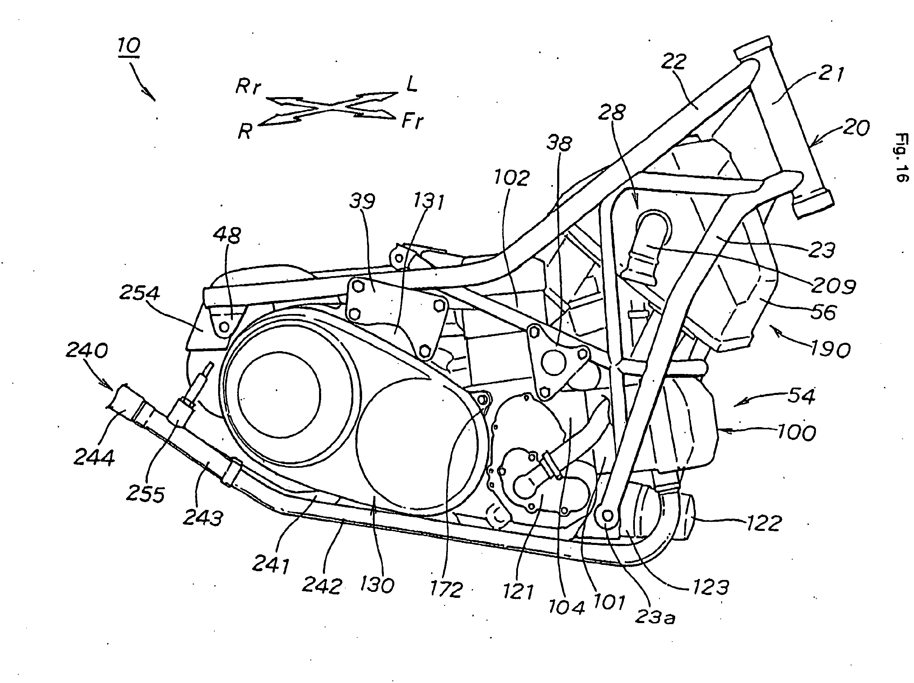

Next, relation between the body frame 20 and the power unit 54 will be described. Fig. 14 is a perspective view when the circumference of the body frame and the power unit according to the invention is viewed from the left front. Fig. 15 is a perspective view when the circumference of the body frame, the power unit and the air cleaner according to the invention is viewed from the left rear. Fig. 16 is a perspective view when the circumference of the body frame, the power unit and the air cleaner according to the invention is viewed from the right front.

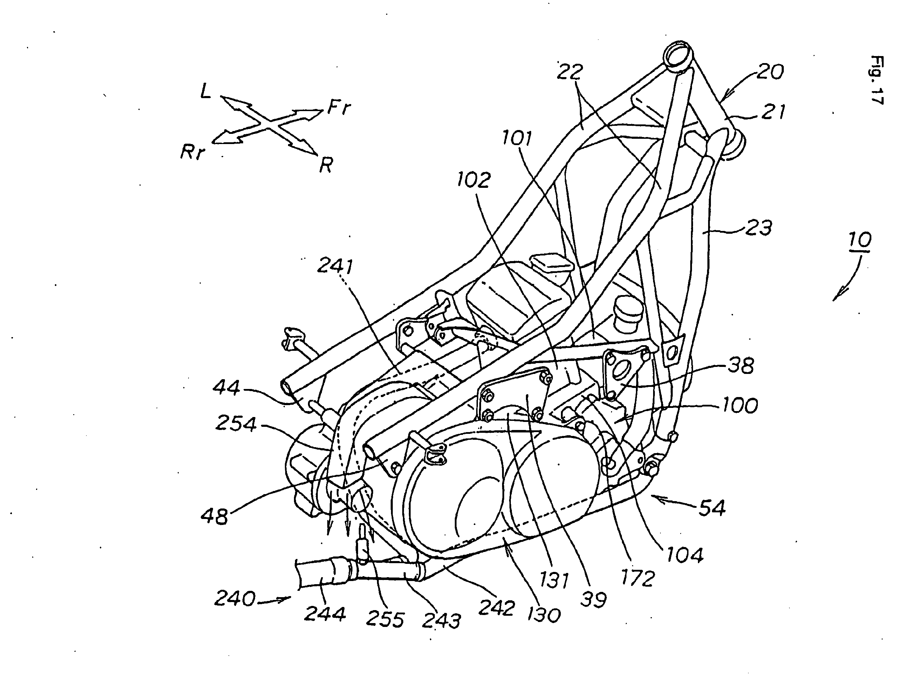

Fig. 17 is a perspective view when the circumference of the body frame and the power unit according to the invention is viewed from the right rear.

Figs. 14 to 17 show that the V-type engine 100 and the transmission unit 130 are suspended from the body frame 20 which is a diamond frame.

As for the V-type engine 100, the left side of the crankcase 104 is attached to the body frame 20 via the left first, second and third hanger plates 35, 36, 37, and the right side of the crankcase 104 is attached to the body frame 20 via the right hanger 23a, and the right first hanger plate 38.

In the meantime, as for the transmission unit 130, the upside of the left side of the main case 131 is attached to the body frame 20 via the left third and fourth hanger plates 37, 44, and the upside of the right side of the main case 131 is attached to the body frame 20 via the right second and third hanger plates 39, 48.

The cross members 32, 33 also function as a guard member for the engine.

As the body frame 20 is formed by a diamond frame and the V-type engine 100 is suspended from the diamond frame, the engine 100 can become a part of the body frame 20. Therefore, no frame member is required to be passed under the V-type engine 100. Therefore, the V-type engine 100 can be lowered up to maximum road clearance. As a result, as the crankshaft 103 of the V-type engine 100 is also lowered as shown in Fig. 9, space above the low deck 73 (see Fig. 1) can be increased by the quantity. Further, the low deck 73 is arranged above the crankcase 104 and the width of the footrest (the width of the low deck 73) can be narrowed respectively by lowering the V-type engine 100.

As described above, according to a layout according to the invention, a degree of freedom in mounting the V-type engine 100 provided with the banking angle □1 equivalent to substantially 90□ or exceeding 90□ can be enhanced more. In addition, the center of the gravity of the low deck vehicle 10 can be lowered by lowering the V-type engine 100.

To explain referring to Fig. 9, after the upper frames 22, 22 are extended substantially linearly, being inclined backward and downward to the vicinity of the cylinder 102 equivalent to the rear bank of the V-type engine 100, a degree of the inclination is relieved and the upper frames are extended up to the vicinity of the pivot (a position of the final output shaft 138) of the swing arm for the rear wheel 62.

As described above, the upper frames 22, 22 can be extended substantially linearly longitudinally. Therefore, the rigidity of the upper frames 22, 22 can be enhanced more and as a result, the rigidity of the body frame 20 can be enhanced more.

As described above, the upper frames 22, 22 can function so that each front contributes to the stabilization of the air intake system 190 and each rear effectively receives a load from the rear wheel 63. Therefore, the rigidity of the body frame 20 can be effectively held by small-sized and light configuration.

As shown in Fig. 15, the capacity of the air cleaner 56 can be increased by curving the right and left first stiffeners 24, 24 in the body frame 20 outside, and even if the air cleaner 56 is arranged in front, the air cleaner can be prevented from interfering with the head pipe 21 and a maximum turned range of the front fork 51 (see Fig. 2).

As shown in Fig. 15, a reference number 148 denotes a servo motor for varying continuously variable transmission gear ratio and the servo motor controls the continuously variable gear ratio of the belt-type continuously variable transmission gear 141 via the gear for a shift 147 shown in Fig. 11. As shown in Fig. 16, a reference number 121 denotes a pump for engine cooling water (cooling water pump). Further, Figs. 16 and 17 show that the transmission unit 130 is attached to the right side of the crankcase 104 by a bolt via a bracket 172 in a right upper part in an attached part in the unit not shown so that the transmission unit can be detached.

Fig. 9 shows that the crankcase 104 and the transmission unit 130 are vertically coupled by the left third hanger plate 37 and a coupling member 173, and the left third hanger plate 37 and the coupling member 173 are provided to the side of a substantially U-shaped opening when the opening is viewed from the top of the power unit 54. The left third hanger plate 37 functions as a coupling member.

To explain in detail, the front of the coupling member 173 is attached to a left rear lower part of the crankcase 104 by two bolts 174, 174 and the rear of the coupling member 173 is attached to a left front lower part of the transmission unit 130 by one bolt 175.

The front of the left third hanger plate 37 (the coupling member 37) is attached to a left rear upper part of the crankcase 104 by one bolt 178 and the rear of the left third hanger plate 37 is attached to a left front upper part of the transmission unit 130 by one bolt 179.

As a result, the rigidity of the power unit 54 can be sufficiently secured. Therefore, as the rigidity of the power unit 54 which is a part of the body frame 20 and which is composed of the engine 100 and the transmission unit 130 is enhanced, the rigidity of the body frame 20 can be also enhanced more.

Further, as the opening can be stiffened by the upper and lower coupling members 37, 173 by providing the upper and lower coupling members 37, 173 on the side of the substantially U-shaped opening when the opening is viewed from the top of the power unit 54, desired rigidity can be efficiently secured, a degree of freedom in securing the rigidity is enhanced and as the coupling members 37, 173 are not protruded from the body, the appearance performance of the low deck vehicle 10 is enhanced.

Further, the coupling member 173 is formed so that it holds the main stand (a stand member) 176 as shown in Figs. 4 to 6. That is, the main stand 176 is attached by coupling a left upper part of the substantially arched main stand 176 when it is viewed from the front to the lower end of the coupling member 173 and coupling a right upper part of the main stand 176 to a lower part of the transmission unit 130 via a stay 177 so that the main stand can stand and can be housed.

As the coupling member 173 for securing the rigidity of the power unit 54 also holds the main stand 176, it can fulfill the function of another functional part and can make the low deck vehicle 10 have light and small-sized configuration in which the number of parts is small.

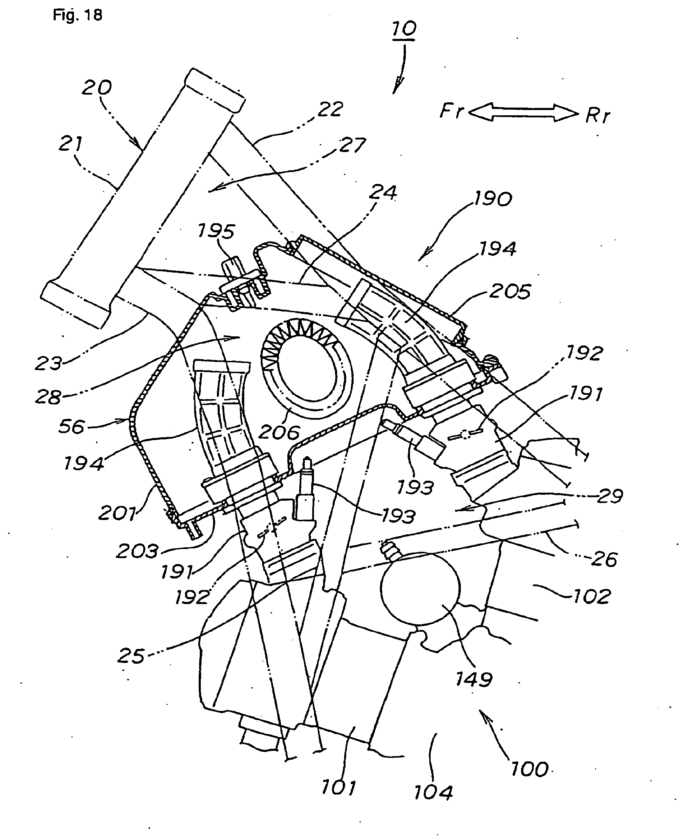

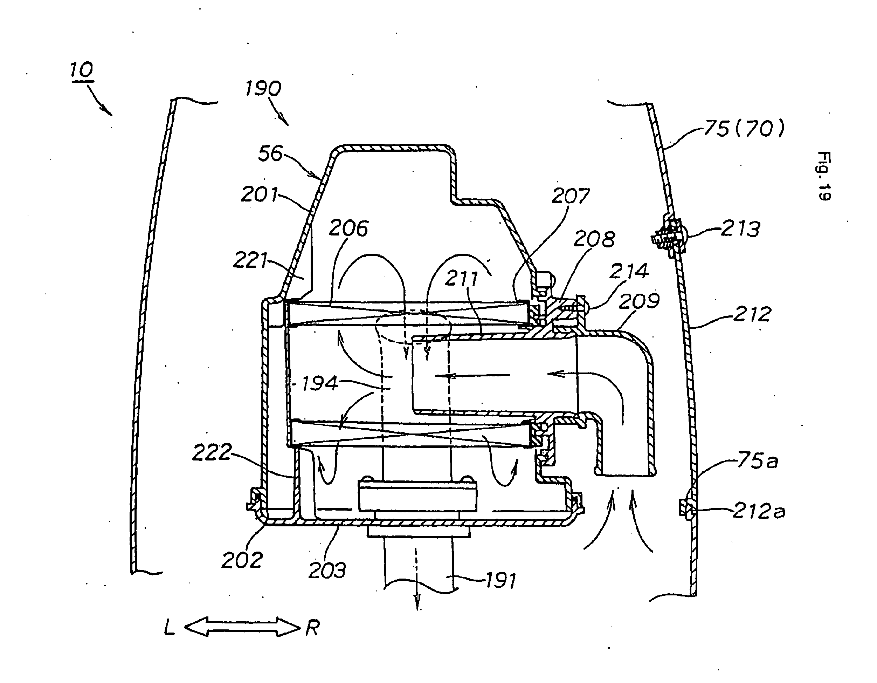

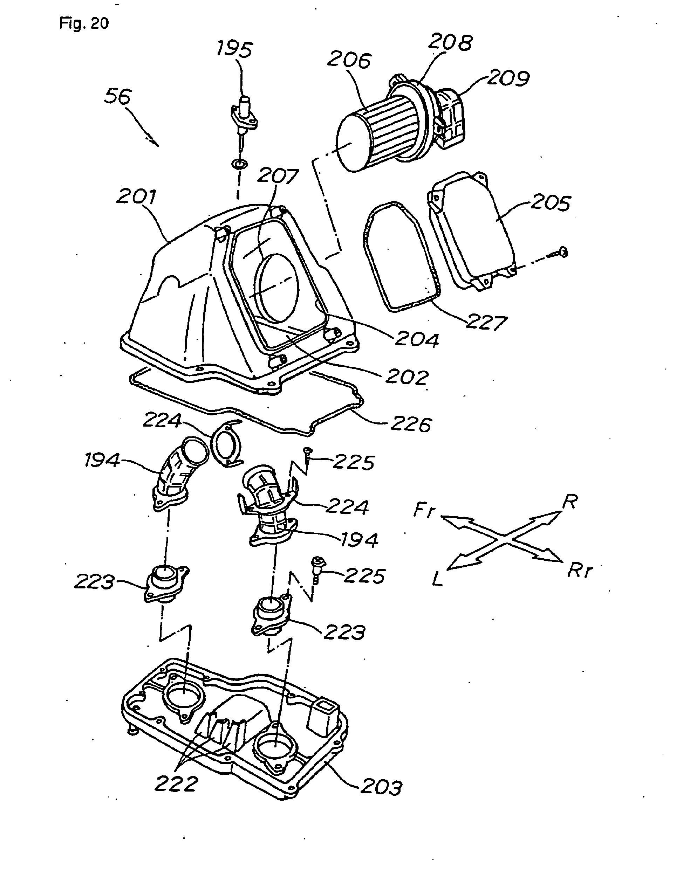

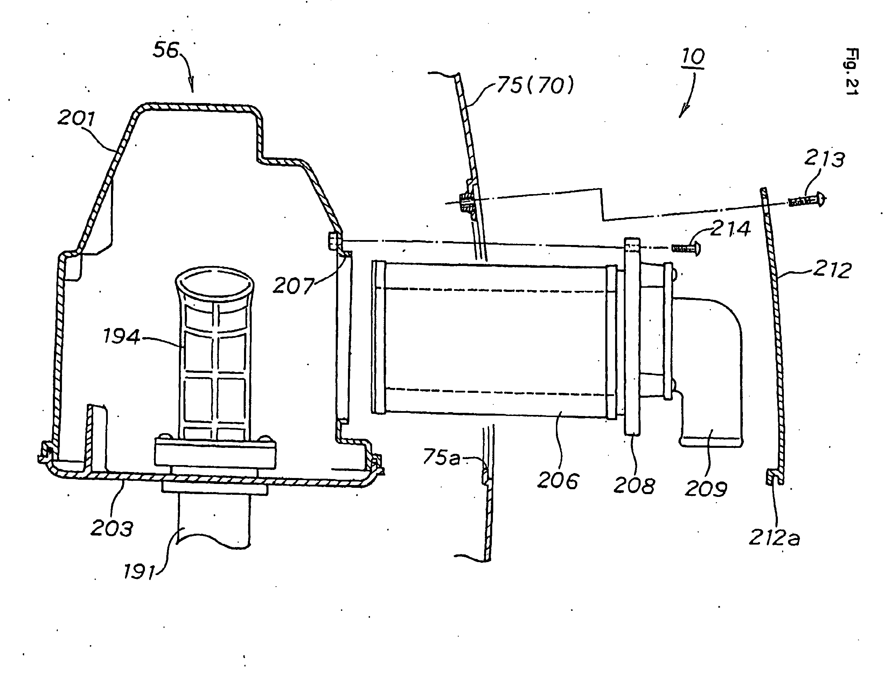

Next, the air intake system 190 will be described. Fig. 18 is a left side view showing the circumference of the body frame, the V-type engine and the air intake system according to the invention and shows the cross section of the air cleaner 56. Fig. 19 is a back sectional view showing the circumference of the air cleaner and the body cover according to the invention, Fig. 20 is an exploded view showing the air cleaner according to the invention and Fig. 21 shows the action of the air cleaner according to the invention.

To explain referring to Figs. 9 and 18, the air intake system 190 including the intake coupling pipes 191, 191 and the air cleaner 56 is arranged above the V-type engine 100 and the space S2 for arranging the fuel tank 57 as an accessory for a vehicle is provided above the air cleaner 56.

Detailedly, the air intake system 190 is arranged between V-type banks (the cylinders 101, 102) of the V-type engine 100 with the air intake system directed toward the head pipe 21 and the fuel tank 57 is arranged above the air intake system 190.

To explain more concretely, the V-type engine 100 is provided with the intake coupling pipes 191, 191 for coupling each cylinder 101, 102 to the air cleaner 56. Each intake coupling pipe 191, 191 is provided with a throttle valve 192, 192 and a fuel injection valve 193, 193 and is provided with a funnel 194, 194 extended into the air cleaner 56. The funnels 194, 194 are connected to each one end of the intake coupling pipes 191, 191 and are arranged with the ends opposite when the funnels are viewed from the side. A filter element 206 is arranged between the funnels 194, 194.

In the drawings, a reference number 149 denotes a sel-motor. A reference number 195 denotes an intake air temperature sensor that detects intake temperature in the air cleaner 56 and the intake air temperature sensor is used for correcting intake temperature when quantity injected from the fuel injection valves 193, 193 is controlled by operation.

As shown in Figs. 18 to 20, the air cleaner 56 is provided with the configuration for enabling a check and maintenance from the side of the low deck vehicle 10. The air cleaner 56 is concretely composed of a cleaner case 201, a bottom plate 203 which can be detached for closing an opening 202 at the lower end of the cleaner case 201, two funnels 194, 194 extended from the bottom plate 203 into a case, a lid for a check 205 which can be detached for closing a check port 204 provided to a rear upper part of the cleaner case 201, a cylindrical filter element 206 housed inside the cleaner case 201, a filter check port 207 provided to the left side or the right side of the cleaner case 201, a lid member 208 which can be detached for closing the filter check port 207 and a substantially L-type intake pipe 209 provided to the lid member 208.

The cleaner case 201 closed by the bottom plate 203 is provided with a function of an intake chamber for the engine.

The lid member 208 is attached to one end of the intake pipe 209 so that the member can be detached, is provided with a communicating pipe 211 communicating with the intake pipe 209 and is attached to one end of the filter element 206 communicating with the communicating pipe 211 so that the member can be detached. Hereby, the air cleaner 56 is provided with the filter element 206 inside and the filter element can be detached after the lid member 208 on the side of the air cleaner 56 is detached.

The center cover 75 (a part of the body cover 70) covering the air cleaner 56 is provided with a hole for a check 75a and is provided with a lid for a check 212 which can be detached for closing the hole for a check 75a. The lid for a check 212 is located in a position opposite to the lid member 208.

Air taken from the intake pipe 209 enters each cylinder 101, 102 of the V-type engine 100 shown in Fig. 8 via the communicating pipe 211, the filter element 206, the cleaner case 201, the funnels 194, 194 and the intake coupling pipes 191, 191.

To check and maintain the filter element 206, as shown in Fig. 21, first, a screw 213 is detached and a fitting groove 212a at one end of the lid for a check 212 is pulled out from the edge of the hole for a check 75a. Hereby, the lid for a check 212 is detached from the center cover 75.

Next, a screw 214 is detached and the lid member 208 is detached through the hole for a check 75a. As a result, the intake pipe 209 and the filter element 206 are also detached together with the lid member 208.

To restore the filter element 206, a procedure reverse to the procedure for detachment has only to be taken.

As clear from the above-mentioned description, as configuration that the air cleaner 56 can be checked and maintained from the side of the low deck vehicle 10 is adopted, a check and maintenance are not required to be made from the upside of the air cleaner 56. Therefore, large space which can be effectively utilized can be sufficiently secured on the upside of the air cleaner 56.

Further, as the filter element 206 provided inside the air cleaner 56 can be detached by detaching the lid member 208 on the side of the air cleaner 56 and the lid for a check 212 opposite to the lid member 208 is provided to the body cover 70 covering the air cleaner 56, the filter element 206 can be easily detached from the side of the air cleaner 56 by detaching the lid member 208 after the lid for a check 212 is detached. Therefore, the check and maintenance of the filter element 206 are facilitated and operationability is enhanced.

Furthermore, as shown in Fig. 18, as the filter element 206 is arranged between the plural funnels 194, 194 extended into the air cleaner 56, the filter element 206 never interferes with the funnels 194, 194 when the filter element 206 is detached from the side of the air cleaner 56. Therefore, the air cleaner 56 is not required to be large-sized to prevent interference. Therefore, the air cleaner 56 can be miniaturized and as a result, a degree of the freedom of design in mounting the air cleaner 56 in the low deck vehicle 10 is enhanced.

Besides, as the space S2 for arranging an accessory for a vehicle such as the fuel tank 57 (see Fig. 9) is provided to the upside of the air cleaner, the space S2 is effectively utilized, the accessory for the vehicle can be easily arranged and a degree of the freedom of design in the distribution of a load can be enhanced. For example, as the center of the gravity of the low deck vehicle 10 can be set in the front by arranging the air cleaner 56 and the fuel tank 57 in the front of the low deck vehicle 10, a load applied to the front wheel 52 and the rear wheel 63 can be more appropriately distributed.

As shown in Fig. 18, each intake coupling pipe 191, 191 is characterized in that it is arranged substantially along the upper frame 22 and the down frame 23. That is, the intake coupling pipe 191 connected to the cylinder 101 equivalent to the front bank is arranged substantially along the down frame 23 and the intake coupling pipe 191 connected to the cylinder 102 equivalent to the rear bank is arranged substantially along the upper frame 22.

Therefore, each intake coupling pipe 191, 191 can be made substantially linear. Air can be more smoothly supplied from each intake coupling pipe 191, 191 to each cylinder 101, 102 by adopting each substantially linear intake coupling pipe 191, 191. As a result, intake efficiency can be more enhanced and the output performance of the V-type engine 100 can be more enhanced.

In addition, as compact arrangement is enabled effectively using space inside the body frame 20 by such configuration, a degree of the freedom of design can be increased and the appearance performance of the low deck vehicle 10 can be also enhanced. Further, when a rider rides the low deck vehicle, it is more facilitated to straddle the body frame 20.

As described above, framed truss structure is formed between the upper frame 22 and the down frame 23 respectively opposite to the side of each intake coupling pipe 191, 191. Therefore, the rigidity in a direction in which each intake coupling pipe 191, 191 is extended of the body frame 20 can be more enhanced.

Therefore, the rigidity of the body frame 20 itself can be secured, in addition, a part for a vehicle such as the intake pipe inside the body frame 20 can be securely held and the body frame 20 can be provided with a role for guarding the part for the vehicle.

The triangular second space 28 provided to the framed truss structure is space from/into which the filter element 206 of the air cleaner 56 can be extracted and inserted. As the second space 28 is provided, the filter element 206 can be easily extracted from the side of the air cleaner 56. Therefore, the check and maintenance of the filter element 206 are facilitated and the operationability is enhanced. In addition, the air cleaner 56 can be miniaturized and lightened.

Reference numbers 221, 222 in Fig. 19 denote an element presser foot. Reference numbers 223, 223 in Fig. 20 denote a joint for connecting the funnel, 224, 224 denote a flange for connecting the funnel, 225, --- denote a screw and 226, 227 denote packing.

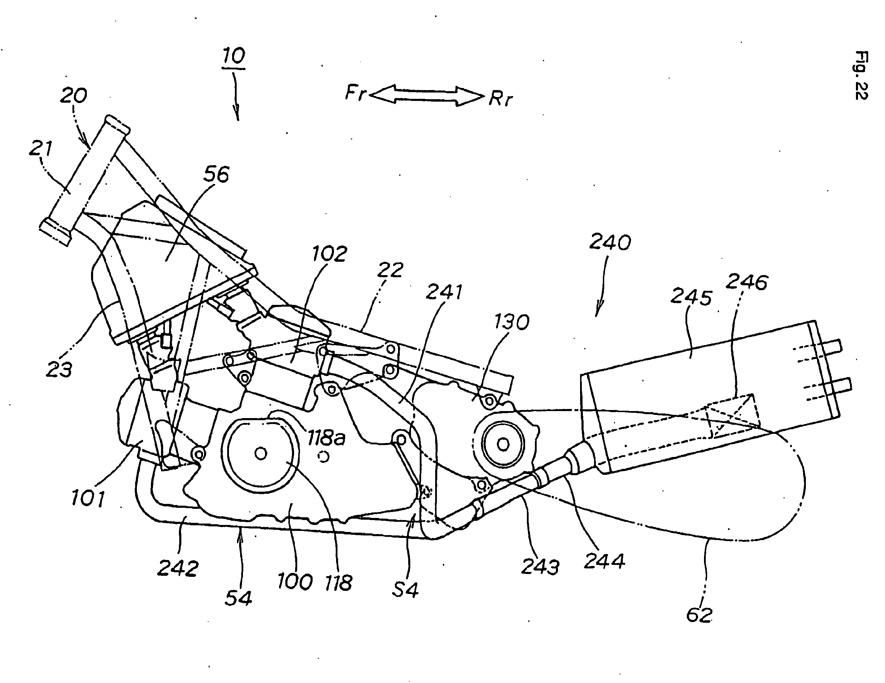

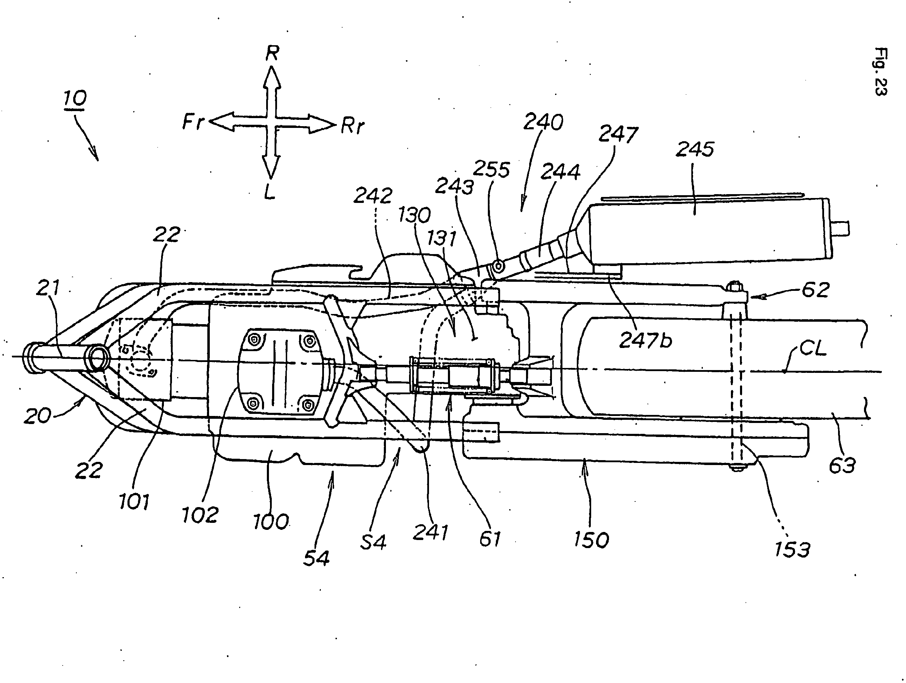

Next, an exhaust system 240 of the V-type engine 100 will be described. Fig. 22 is a left side view showing the circumference of the body frame, the power unit and the exhaust system according to the invention and Fig. 23 is a plan showing the circumference of the body frame, the power unit and the exhaust system according to the invention.

To explain also referring to Figs. 14 to 17, the exhaust system 240 of the V-type engine 100 is composed of a first exhaust pipe 241 connected to the cylinder 102 equivalent to the rear bank, a second exhaust pipe 242 connected to the cylinder 101 equivalent to the front bank, a collecting pipe 243 for collecting the rear end of the first exhaust pipe 241 and the rear end of the second exhaust pipe 242 and a muffler 245 connected to the rear end of the collecting pipe 243 via an extended pipe 244. The muffler 245 houses a catalyzer 246 (see Fig. 22) and is arranged on the right upside of the rear wheel 63.

The first exhaust pipe 241 connected to the cylinder 102 equivalent to the rear bank is extended backward (concretely, leftward and backward) from the cylinder 102 equivalent to the rear bank, the rear end is extended downward, passes the space S4 in a substantially U-shaped opening when the opening is viewed from the top in the power unit 54, the lower end is extended backward (concretely, rightward and backward), passes under the power unit 54, and the rear end is connected to the second exhaust pipe 242 via the collecting pipe 243.

As the first exhaust pipe 241 connected to the cylinder 102 equivalent to the rear bank of the V-type engine 100 is passed in the space S4 in the substantially U-shaped opening when the opening is viewed from the top of the power unit 54, the space S4 in the U-shaped opening can be effectively utilized. Therefore, as the first exhaust pipe 241 is not protruded from the body, the appearance performance of the low deck vehicle 10 is enhanced.

The second exhaust pipe 242 connected to the cylinder 101 equivalent to the front bank is extended downward from the cylinder 101 equivalent to the front bank, the lower end is extended rightward, the right end is extended backward along a right lower part of the power unit 54 and the rear end is connected to the collecting pipe 243.

As described above, the plural exhaust pipes 241, 242 are provided and at least one exhaust pipe is passed under the case 131.

That is, the exhaust pipe 242 (the second exhaust pipe 242) for the front cylinder extended backward from the front cylinder 101 through the downside of the case 131 and the exhaust pipe 241 (the first exhaust pipe 241) for the rear cylinder extended backward through the downside of the case 131 after the exhaust pipe is extended downward from the rear cylinder 102 are provided. Each exhaust pipe 241, 242 for the front and rear cylinders is characterized in that the rear end of each exhaust pipe 241, 242 is connected to the muffler 245 (the muffler for exhaust 245).

As shown in Fig. 14, the second exhaust pipe 242 passes one side (the right side) of the front of the V-type engine 100 and in the crankcase 104 in the front of the engine on the other side (the left side) of the V-type engine 100, an oil filter 122 and an oil cooler 123 are provided. That is, the oil filter 122 and the oil cooler 123 are provided to the front of a left half of the crankcase 104.

The transmission unit 130 is configured so that it is provided with an intake port 251 on the right side as shown in Fig. 11, is provided with a fan 253 to a pulley 252 of the belt-type continuously variable transmission gear 141, outside air is taken in and cools the transmission unit 130. Exhaust wind after cooling is exhausted in atmospheric air by an exhausting member 254 provided to the rear upside of the transmission unit 130 as shown in Figs. 14 to 16.

The exhausting member 254 is a vertically reverse U-shaped duct when the duct is viewed from the side and exhaust wind is hit on the first and second exhaust pipes 241, 242. A part in which exhaust wind is hit on the first and second exhaust pipes 241, 242 is a part in which the first exhaust pipe 241 and the second exhaust pipe 242 are collected, that is, the collecting pipe 243 or the vicinity. An exhaust sensor 255 is provided to the part in which exhaust wind is hit on the first and second exhaust pipes 241, 242. That is, the exhaust sensor 255 is provided to the rear of the collecting pipe 243. As the exhaust sensor 255 is cooled by exhaust wind, it is advantageous so as to hold the function and the performance of he exhaust sensor 255.

The exhaust sensor 255 detects the quantity of oxygen in exhaust gas. Feedback control can be applied to the injection quantity of the fuel injection valves 193, 193 (see Fig. 18) based upon the detection data. For example, when a large quantity of oxygen is detected, it is judged that the ratio of the quantity of supplied fuel to the quantity of supplied air is small and the fuel injection valves 193, 193 are controlled so that the injection quantity is increased.

As described above, as the exhaust sensor 225 is provided to the part in which exhaust wind is hit on the first and second exhaust pipes 241, 242, the exhaust sensor 255 can be cooled by exhaust wind. As thermal effect applied to the exhaust sensor 255 by exhaust gas can be reduced, the method is advantageous so as to hold the function and the performance of the exhaust sensor 255. For example, injection control can be always satisfactorily applied to the fuel injection valves 193, 193 (see Fig. 18) by the exhaust sensor 255.

The above-mentioned exhaust system 240 will be collectively described below.

As the power unit 54 is formed in a substantially U-shape when the power unit is viewed from the top, the first exhaust pipe 241 connected to the cylinder 102 equivalent to the rear bank of the V-type engine 100 is extended backward from the cylinder 102, the rear end is extended downward and is passed in the space S4 in the substantially U-shaped opening when the opening is viewed from the top, the lower end is extended backward, and the rear end can be connected to the second exhaust pipe 242 connected to the cylinder 101 equivalent to the front bank of the V-type engine 100.

As described above, the space S4 is effectively utilized by passing the first exhaust pipe 241 connected to the cylinder 102 equivalent to the rear bank over the power unit 54 and further, extending the first exhaust pipe downward in the space S4 in the substantially U-shaped opening when the opening is viewed from the top, and the first exhaust pipe 241 can be connected to the second exhaust pipe 242 connected to the cylinder 101 equivalent to the front bank. Therefore, plural exhaust pipes for the longitudinal V-type engine can be efficiently arranged.

Further, as exhaust wind from the exhausting member 254 provided to the rear of the transmission unit 130 is hit on the first and second exhaust pipes 241, 242, the first and second exhaust pipes 241, 242 and exhaust gas in the pipes can be controlled at desired temperature by the exhaust wind. Particularly, both can be simultaneously cooled by cooling the first and second exhaust pipes 241, 242 and exhaust gas by exhaust wind after the transmission unit 130 is cooled, separate cooling means is not required to be provided, and the low deck vehicle 10 can be miniaturized.

Furthermore, as exhaust wind from the exhausting member 254 is hit on the vicinity of a part in which the first exhaust pipe 241 and the second exhaust pipe 242 are collected, exhaust gas in the first and second exhaust pipes 241, 242 is cooled together, the temperature can be controlled and the method is efficient.

Besides, as shown in Fig. 14, the second exhaust pipe 242 is passed on one side of the front of the V-type engine 100, however, no first and second exhaust pipes 241, 242 are passed in the crankcase 104 on the other side of the front of the V-type engine 100. As the oil filter 122 and the oil cooler 123 which are functional parts for lubricating and cooling oil for the engine can be provided in the crankcase 104 on the other side of the front of the V-type engine 100 effectively utilizing space in which no exhaust pipes 241, 242 are passed, the low deck vehicle 10 can be miniaturized.

Next, the arrangement of the rear cushion 61 for the rear wheel will be described.

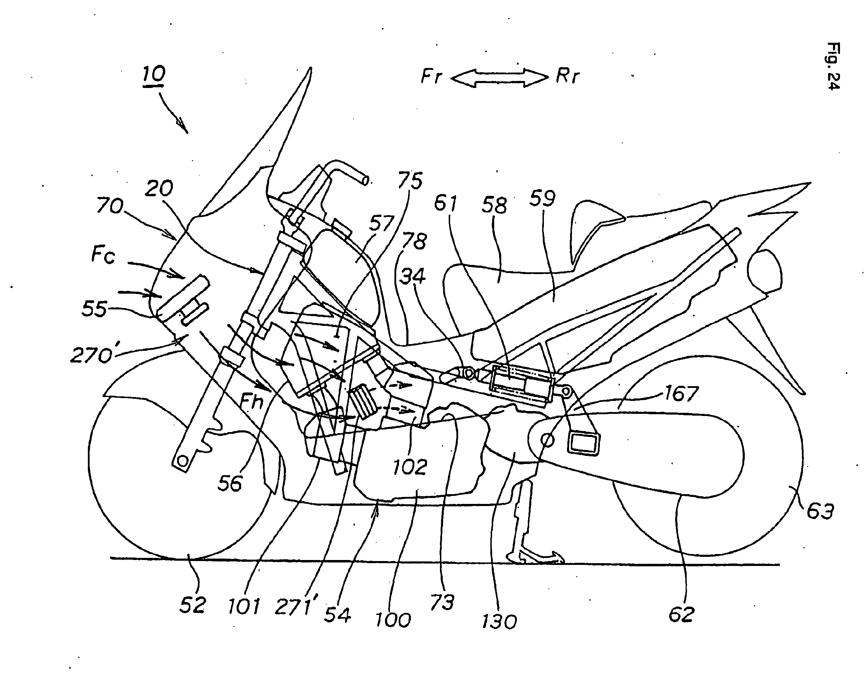

Fig. 24 is a schematic diagram showing the low deck vehicle according to the invention and shows that the housing box 59 having the substantially similar longitudinal length to the longitudinal length of the seat 58 is provided under the seat 58 and the rear cushion 61 for the rear wheel is laid under the housing box 59. Referring to Fig. 13, it is known that the rear cushion 61 is arranged substantially in the center of the body (in the center of the width of the body).

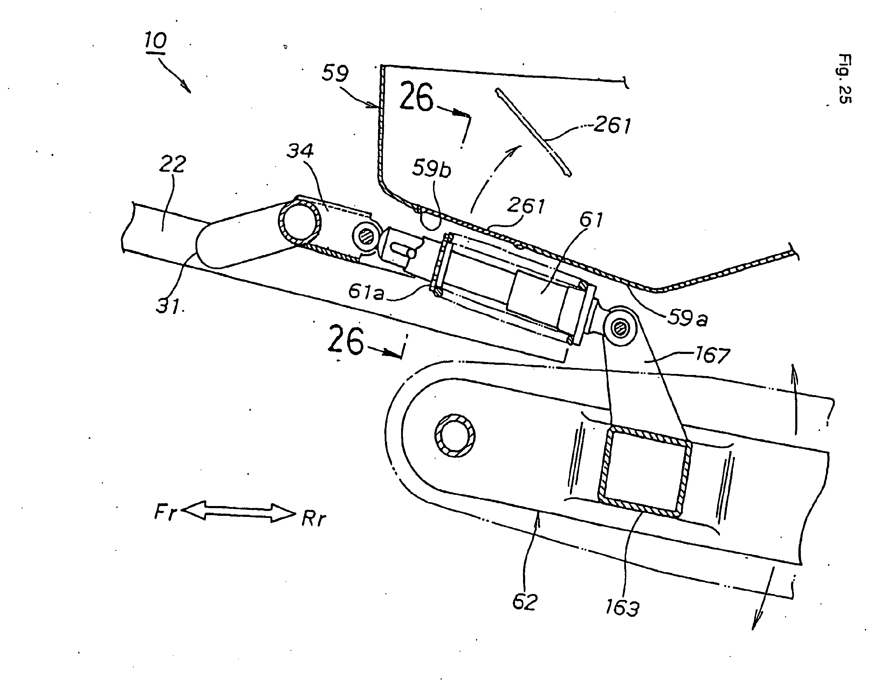

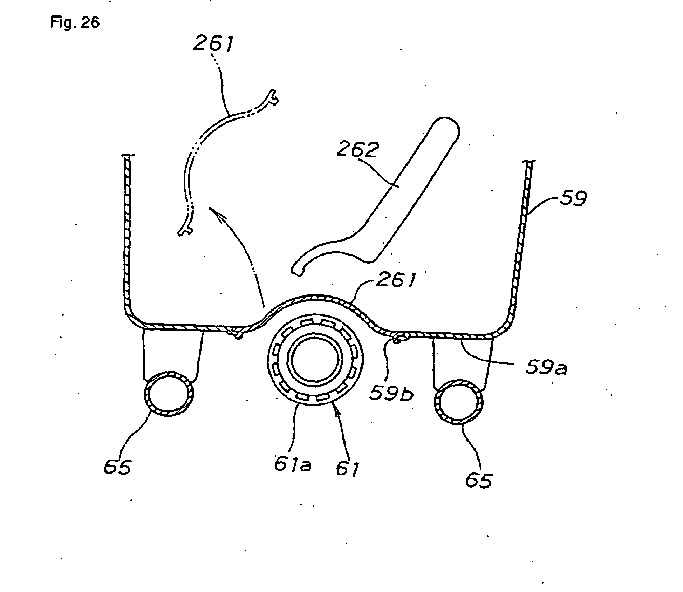

Fig. 25 is a left side view showing the circumference of the housing box and the rear cushion for the rear wheel according to the invention and Fig. 26 is a sectional view viewed along a line 26-26 in Fig. 25.

The rear cushion 61 for the rear wheel is arranged along the rear of the upper frame 22. Detailedly, the rear cushion 61 is arranged on the upper frame 22 and substantially in parallel with the upper frame 22 by coupling one end of the rear cushion 61 to the bracket for the cushion 34 of the upper frame 22 and coupling the other end of the rear cushion 61 to a bracket for the cushion 167 of the swing arm 62.

The housing box 59 is provided with a lid for a check 261 for the rear cushion 61 at the bottom 59a. The rear cushion 61 is provided with an adjusting member 61 a for adjusting cushion characteristics. The bottom 59a of the housing box 59 is located over the adjusting member 61 a.

When the rear cushion 61 is adjusted, the lid for a check 261 attached to the bottom 59a by elastic fitting so that the lid for a check can be detached is detached, a tool 262 is inserted from a hole for a check 59b of the bottom 59a and the adjusting member 61 a has only to be adjusted. Adjusting work is simple.

Structure in which the rear cushion 61 is attached will be collectively described below.

As the rear cushion 61 for the rear wheel is laid under the housing box 59, the housing box does not interfere with the rear cushion 61 for the rear wheel located substantially in the center of the body even if the housing box 59 is extended longitudinally. Therefore, the housing box 59 having the substantially similar longitudinal length to the longitudinal length of the seat 58 can be arranged under the seat 58. Therefore, housing space for housing a long thing having a large diameter can be easily secured by increasing the longitudinal length of the housing box 59 and enlarging the housing space.

Further, as the lid for a check 261 of the rear cushion 61 for the rear wheel is provided at the bottom of the housing box 59, the lid for a check 261 is detached and the rear cushion 61 can be checked and maintained. As the rear cushion can be easily checked and maintained without detaching the housing box 59 and the body cover 70 (see Fig. 1), operationability is enhanced.

Furthermore, as the rear cushion 61 for the rear wheel is arranged along the rear of the upper frame 22 of the diamond frame 20, the rigidity of the rear cushion 61 for the rear wheel can be sufficiently secured by the upper frame 22 having large rigidity and small-sized suspension structure can be acquired.

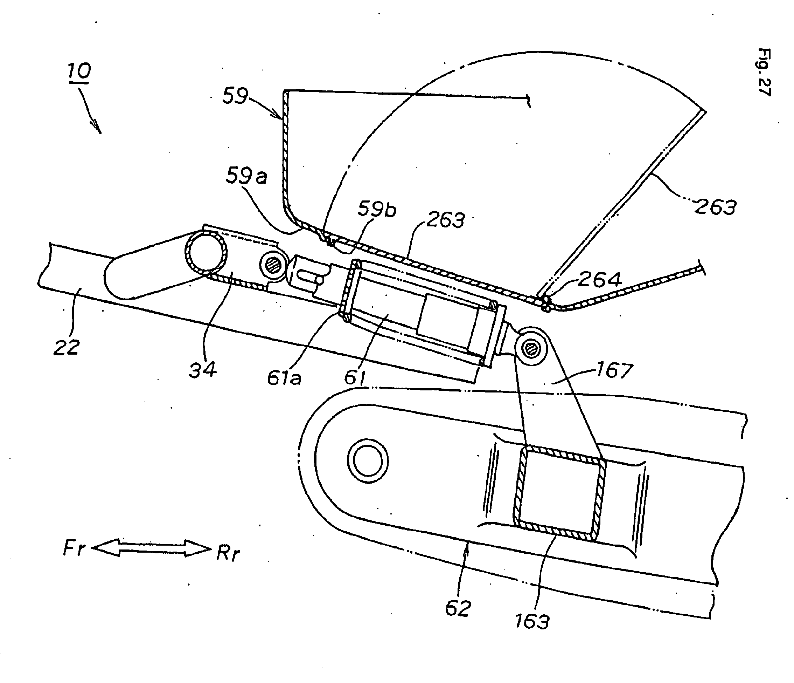

Fig. 27 shows a transformed example of the housing box according to the invention and corresponds to an embodiment shown in Fig. 25. The housing box 59 in the transformed example is characterized in that a lid for a check 263 provided to the bottom 59a has hinge structure in which the lid is opened or closed by a hinge 264. The other configuration is the same as that shown in Figs. 24 to 26, the same reference number is allocated and the description is omitted.

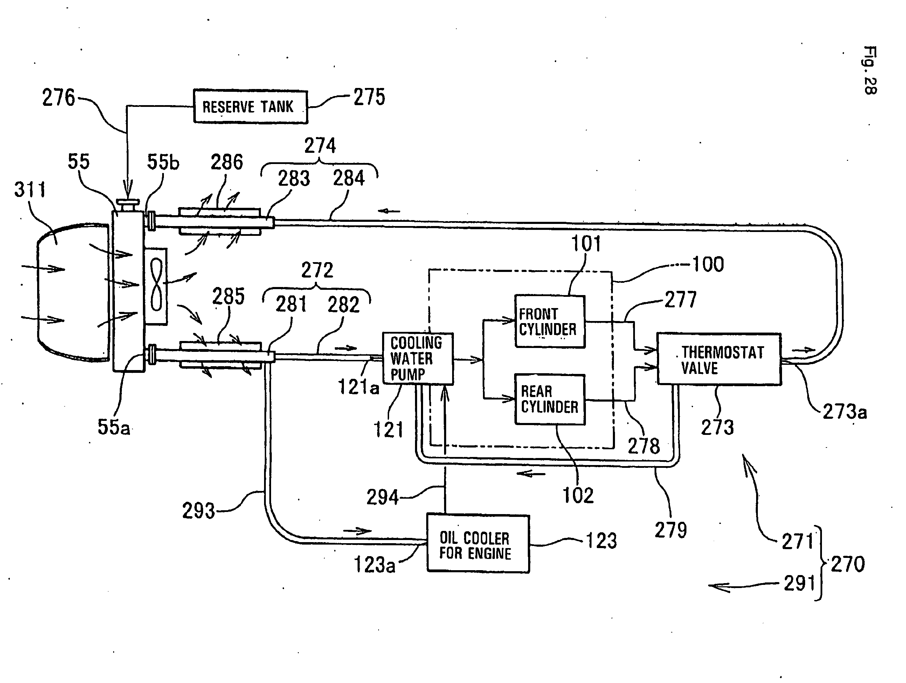

Next, referring to Figs. 28 to 37, a system 270 for circulating liquid such as cooling water circulated in the engine 100 will be described.

Fig. 28 is a schematic diagram showing the system for circulating liquid circulated in the engine according to the invention, and the system for circulating liquid 270 is composed of an engine cooling water circulating system 271 for circulating cooling water for cooing the engine 100 itself and an oil cooler cooling water circulating system 191 for circulating cooling water for cooling the oil cooler 123 for the engine.

The engine cooling water circulating system 271 is composed of a sending line 272 for sending cooling water from the radiator 55 for the engine to the cooling water pump 121, a return line 274 for returning cooling water from a thermostat valve 273 of the water-cooled engine 100 to the radiator 55 for the engine and a reserve line 276 from a reserve tank 275 to the radiator 55 for the engine.

Cooling water is circulated in a path from the radiator 55 for the engine to the radiator 55 for the engine through the sending line 272, the cooling water pump 121, each water-cooled jacket (not shown) of the front cylinder 101 of the water-cooled engine 100 and the rear cylinder 102, the thermostat valve 273 and the return line 274.

The sending line 272 is liquid piping composed of a sending pipe 281 one end of which is connected to a sending port 55a of the radiator 55 for the engine and a sending hose 282 connected to an inlet 121 a of the cooling water pump 121 from the other end of the sending pipe 281.

The return line 274 is liquid piping composed of a return pipe 283 one end of which is connected to a return port 55b of the radiator 55 for the engine and a return hose 284 connected to an outlet 273a of the thermostat valve 273 from the other end of the return pipe 283.

Reference numbers 277, 278, 279 denote a return hose. The return hoses 277, 278 are a hose for returning cooling water from each water-cooled jacket (not shown) of the front and rear cylinders 101, 102 to the thermostat valve 273. The return hose 279 is a hose for returning cooling water from the thermostat valve 273 to the cooling water pump 121 when the temperature of cooling water is fixed or lower and the thermostat valve 273 is closed.

The oil cooler cooling water circulating system 291 is composed of a sending line 293 branched from the sending pipe 281 of the sending line 272 for sending cooling water to the oil cooler 123 and a return line 294 for returning cooling water from the oil cooler 123 to the cooling water pump 121.

Cooling water is circulated from the radiator 55 for the engine to the radiator 55 for the engine through the sending line 272, the sending line 293, the oil cooler 123, the return line 294, the cooling water pump 121, each water-cooled jacket (not shown) of the front cylinder 101 and the rear cylinder 102 of the water-cooled engine 100, the thermostat valve 273 and the return line 274.

The sending line 293 is a sending hose. The return line 294 is a cooling water passage in the engine 100.

The sending pipe 281 and the return pipe 283 of the engine cooling water circulating system 271 are provided with cooling fins 285, 286 on the respective outside surfaces.

A duct 311 is provided between the front cover 71 (see Fig. 2) and the radiator 55 for the engine. The detailed configuration of the duct 311 and the detailed configuration of the sending and return pipes 281, 283 of the engine cooling water circulating system 271 will be described below.

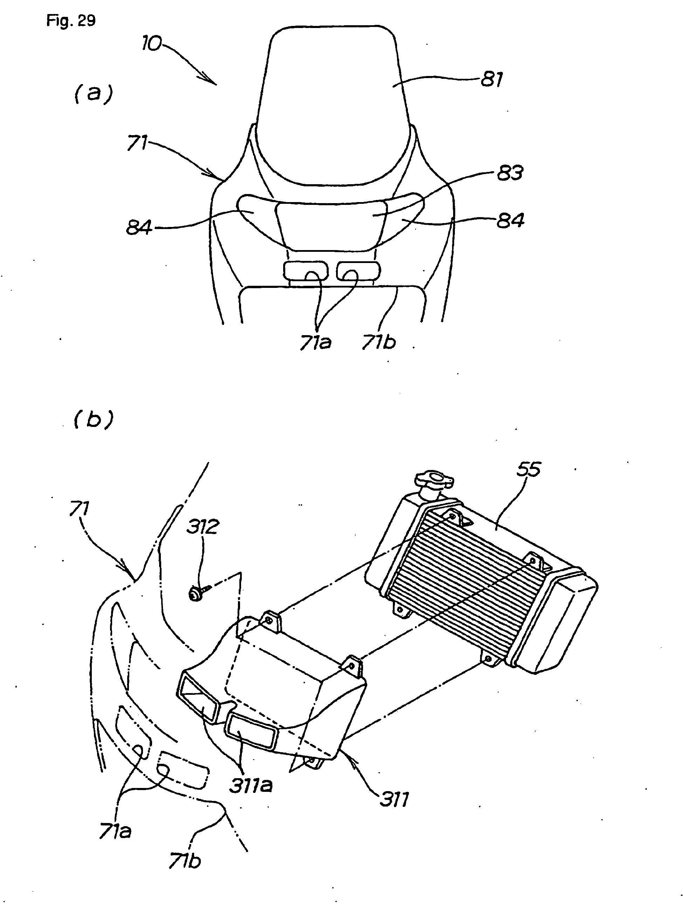

Figs. 29A and 29B show the configuration (No. 1) of the circumference of the front cover and the radiator according to the invention and shows a first embodiment of the front cover 71 and the duct 311.

Fig. 29A is a front view showing the front cover 71 and shows that right and left two inlets 71a, 71a for taking outside air inside are made under the head lamp 83 out of the front of the front cover 71. Fig. 29B is an exploded view showing configuration that the duct 311 in the first embodiment for leading outside air taken inside from the inlets 71a, 71a to the radiator 55 is attached to the radiator 55 via screws 312, ---. Inlets 311a, 311 a of the duct 311 are coincident with the inlets 71a, 71a of the front cover 71. As described above, the front cover 71 is provided with the inlets 71a, 71a (311a, 311a) for taking outside air inside.

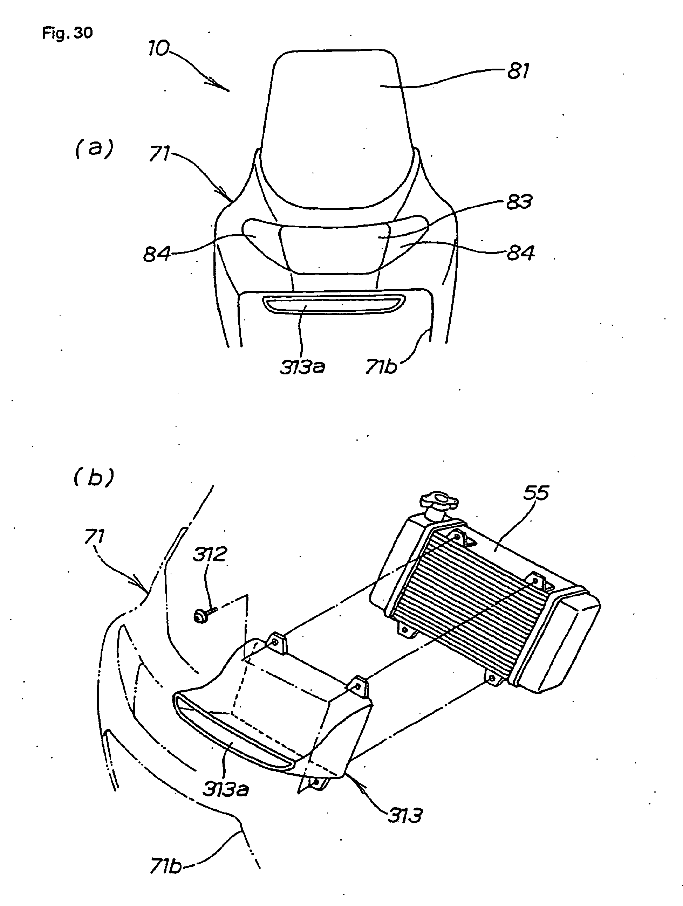

Figs. 30A and 30B show the configuration (No. 2) of the circumference of the front cover and the radiator according to the invention and shows a second embodiment of the front cover 71 and the duct 311.

Fig. 30A shows the configuration of the front cover 71 viewed from the front and shows that an inlet 313a of a duct 313 in the second embodiment is arranged in an opening 71b under the head lamp 83 out of the front of the front cover 71. Fig. 30B is an exploded view showing configuration that the duct 313 for leading outside air taken from the inlet 313a having large width to the radiator 55 is attached to the radiator 55 via screws 312, ---. As described above, the front cover 71 is provided with the inlet 311 a for taking outside air inside.

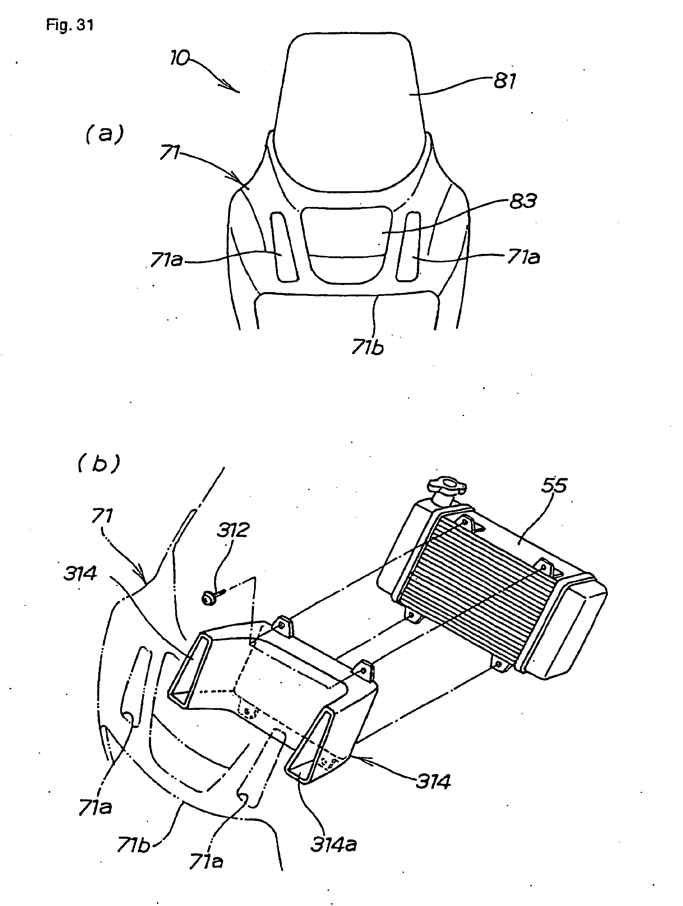

Figs. 31A and 31B show the configuration (No. 3) of the circumference of the front cover and the radiator according to the invention and show a third embodiment of the front cover 71 and the duct 311.

Fig. 31A is a front view showing the front cover 71 and shows that right and left two inlets 71a, 71a for taking outside air inside are made on both right and left sides of the head lamp 83. Fig. 31B is an exploded view showing configuration that a duct 314 in the third embodiment for leading outside air taken via the inlets 71a, 71a to the radiator 55 is attached to the radiator 55 via screws 312, ---. Inlets 314a, 314a of the duct 314 are coincident with the inlets 71a, 71a of the front cover 71. As described above, the front cover 71 is provided with the inlets 71a, 71a (314a, 314a) for taking outside air.

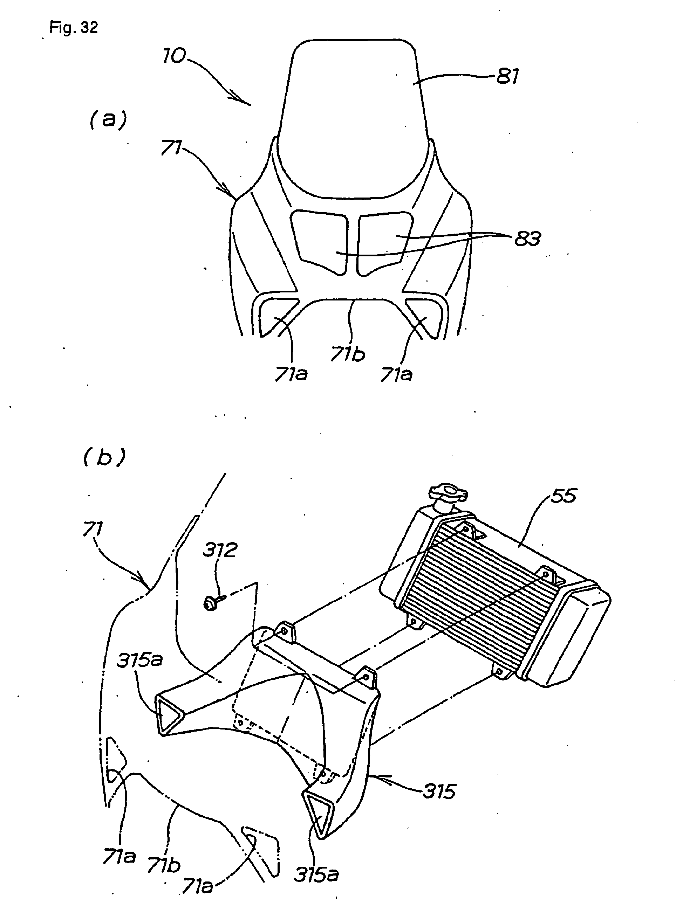

Figs. 32A and 32B show the configuration (No. 4) of the circumference of the front cover and the radiator according to the invention and show a fourth embodiment of the front cover 71 and the duct 311.

Fig. 32A shows the configuration of the front cover 71 viewed from the front and shows that an opening 71b out of the front cover 71 is provided under the head lamp 83 and right and left two inlets 71a, 71a for taking outside air are made at right and left upper corners of the opening 71b. Fig. 32B is an exploded view showing configuration that a duct 315 in the fourth embodiment for leading outside air taken from the inlets 71a, 71a to the radiator 55 is attached to the radiator 55 via screws 312, ---. Inlets 315a, 315a of the duct 315 are coincident with the inlets 71a, 71a of the front cover 71. As described above, the front cover 71 is provided with the inlets 71a, 71a (315a, 315a) for taking outside air.

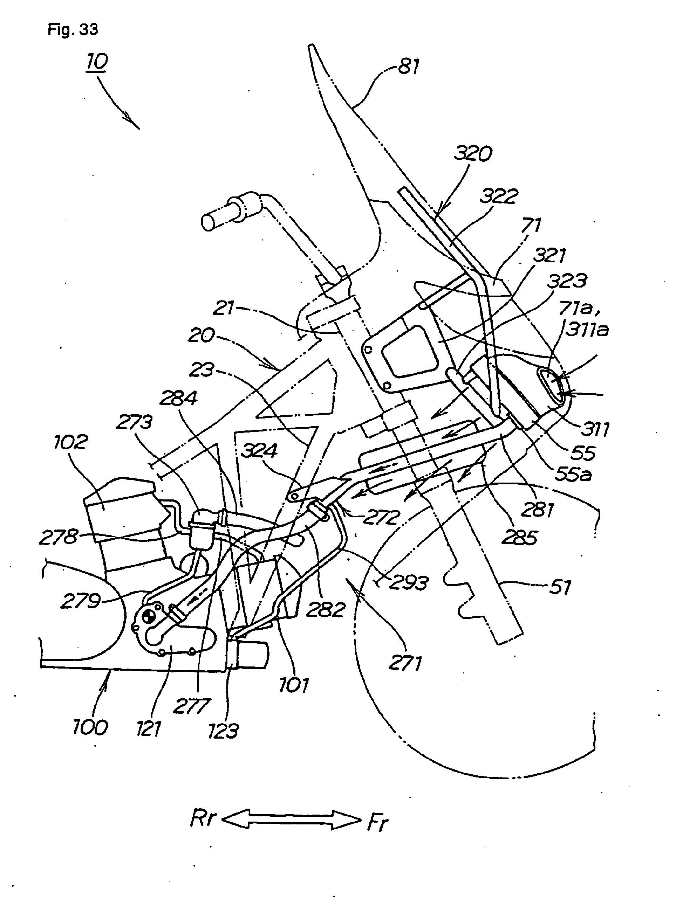

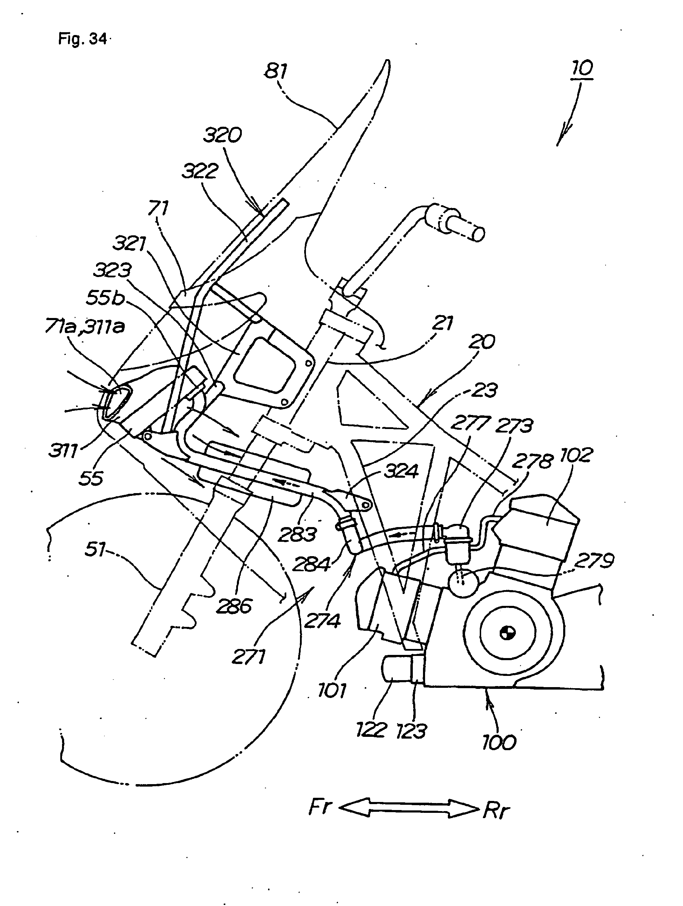

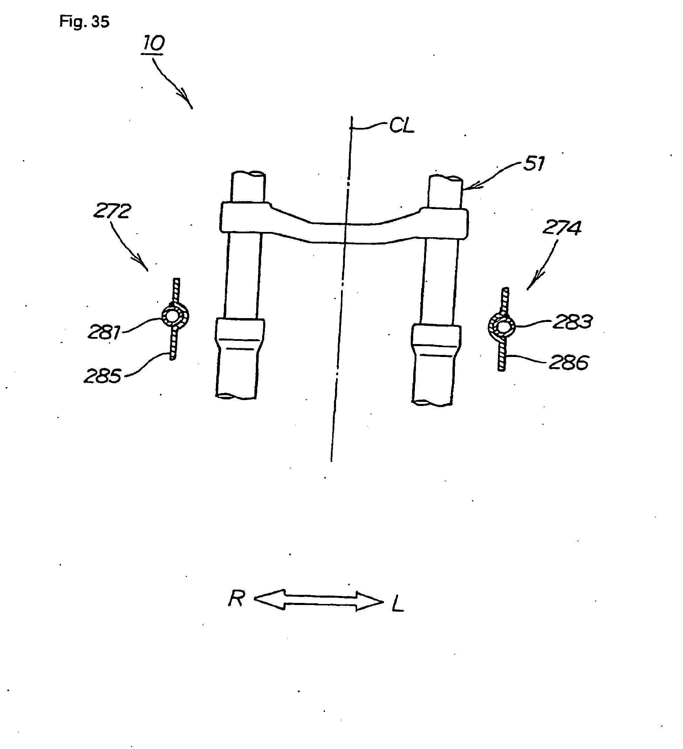

Fig. 33 is a piping diagram (No. 1) in which the stay and the sending and return pipes of the engine cooling water circulating system according to the invention are viewed from the right side, Fig. 34 is a piping diagram (No. 2) in which the stay and the sending and return pipes of the engine cooling water circulating system according to the invention are viewed from the left side and Fig. 35 is a sectional view showing a main part viewed from the front of the front fork and the stay according to the invention.

A stay 320 is composed of right and left first stays 321, 321 bolted on the head pipe 21, right and left second stays 322, 322 extended forward from these first stays 321, 321 and supporting the front cover 71, right and left third stays 323, 323 extended forward from these first stays 321, 321 and supporting the radiator 55 and right and left fourth stays 281, 283 extended backward from these third stays 323, 323 and bolted on the down frame 23 of the body frame 20 via stay plates 324, 324.

The invention is characterized in that the right fourth stay 281 is formed by a pipe as shown in Fig. 33, this pipe functions as a sending pipe 281, the left fourth stay 283 is formed by a pipe as shown in Fig. 34 and the pipe functions as a return pipe 283.

The sending pipe 281 and the return pipe 283 of the engine cooling water circulating system 271 are pipes passed separately on the right and left sides of the front fork 51, and cooling fins 285, 286 are provided along the outside faces of these pipes 281, 283. These cooling fins 285, 286 are plates vertically directed, are fixed by welding and others with them closely fitted on the outside faces of the pipes 281, 283, and material (for example, an aluminum alloy) excellent in thermal conductivity may be also used in addition to a steel pipe.

Wind taken inside from the inlet 71a of the front cover 71 when the low deck vehicle 10 is driven flows in a path from the inlet 311a to the radiator 55 via the duct 311, cools cooling water, and flows into the rear of the body after the wind flows further backward and cools the pipes 281, 283 and the cooling fins 285, 286. Hereby, cooling water flowing in the pipes 281, 283 can be cooled by outside air.

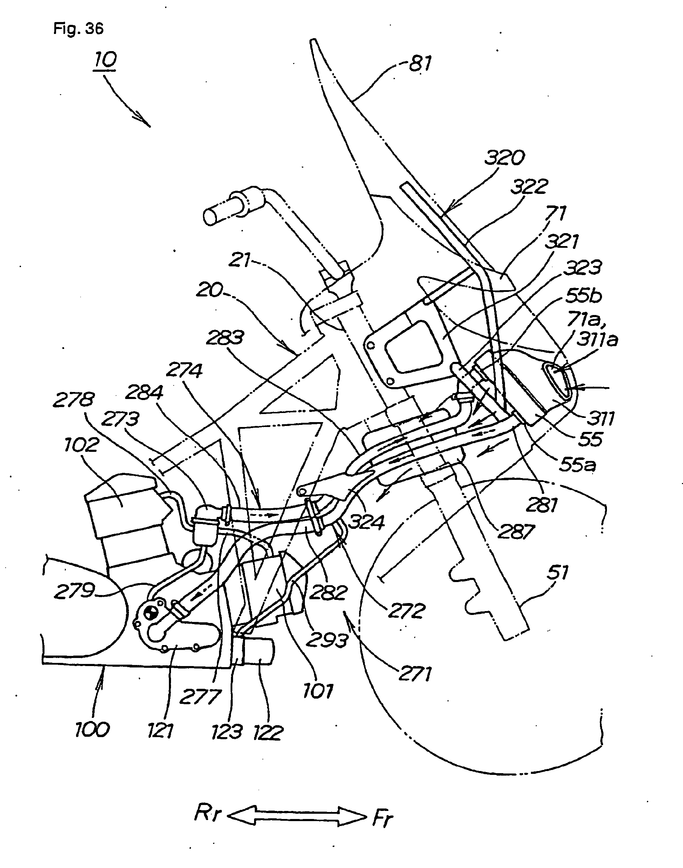

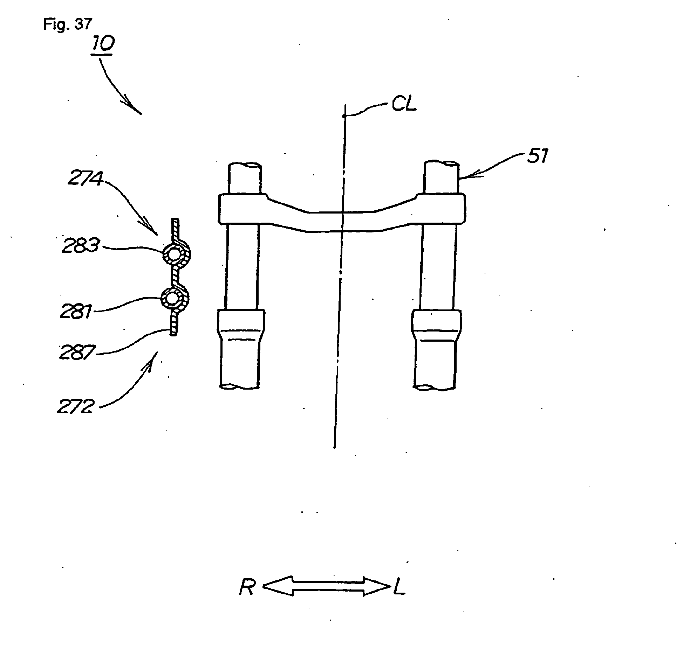

Fig. 36 is a piping diagram in which the stay and sending and return pipes (in a transformed example) of the engine cooling water circulating system according to the invention are viewed from the right side and Fig. 37 is a sectional view showing a main part of the front fork and a stay (in a transformed example) according to the invention viewed from the front.

A stay 320 in a transformed example is characterized in that two fourth stays 281, 283, that is, a sending pipe 281 and a return pipe 283 are collectively passed on one side of the front fork 51 and a cooling fin 287 is provided along the outside faces of the sending and return pipes 281, 283. The other configuration is similar to the configuration shown in Figs. 33 to 35, the same reference number is allocated and the description is omitted.

In Fig. 36, a cooling fin 287 for cooling the sending and return pipes 281, 283 is integrated, however, a cooling fin for cooling the sending pipe 281 and a cooling fin for cooling the return pipe 283 may be also separately provided.

The configuration on the other side of the front fork 51 out of the stay 320 in the transformed example is general stay structure using a pipe and a bar as shown in Fig. 2.

The circulating system 270, the stay 320, the front cover 71 and the duct 311 will be collectively described below.

Liquid such as cooling water circulated in the engine 100 can be made to flow in the pipes by forming at least a part 281, 283 of the stay 320 for supporting the front cover 71 by a pipe and using the pipes for a part (the sending and return pipes 281, 283) of liquid piping. As a piping part can be reduced because the stay 320 functions as a part of liquid piping, a piping cost can be reduced. Further, the concentration of the stay 320 and the liquid piping in the front cover 71 is relieved by quantity in which the stay 320 functions as a part of the liquid piping and the front cover can be lightened. Therefore, a degree of the freedom of design around the front cover 71 is increased, the low deck vehicle 10 (the motorcycle 10) is miniaturized and lightened and a degree of the freedom of design can be enhanced.

For example, in case the engine 100 is arranged in the body frame 20 and the radiator 55 is arranged in front of the head pipe 21, a piping (the engine cooling water circulating system 271) for connecting the engine 100 and the radiator 55 passes in the vicinity of the head pipe 21. In the vicinity of the head pipe 21, the stay 320 for supporting the front cover 71 covering the circumference of the front of the head pipe 21 by the body frame 20 also passes. Such a stay 320 can be utilized for a part of liquid piping.

Further, as the inlet 71a (311a) which can take outside air inside and can make the outside air flow around the pipes 281, 283 is provided to the front cover 71, liquid flowing in the pipes 281, 283 can be cooled by the outside air. As liquid passing the pipes 281, 283 is cooled, cooling effect is enhanced. For example, in case water for cooling the engine 100 is circulated and is cooled by the radiator 55, the cooling power of the radiator 55 can be reduced by the quantity of the cooling effect by the pipes 281, 283. As a result, the radiator 55 can be miniaturized.

Furthermore, as the cooling fins 285, 286, 287 are provided to the outside faces of the pipes 281, 283, cooling efficiency that liquid flowing in the pipes 281, 283 is cooled by outside air can be more enhanced. Further, the cooling fins 285, 286, 287 can also function as a member for stiffening the pipes 281, 283.

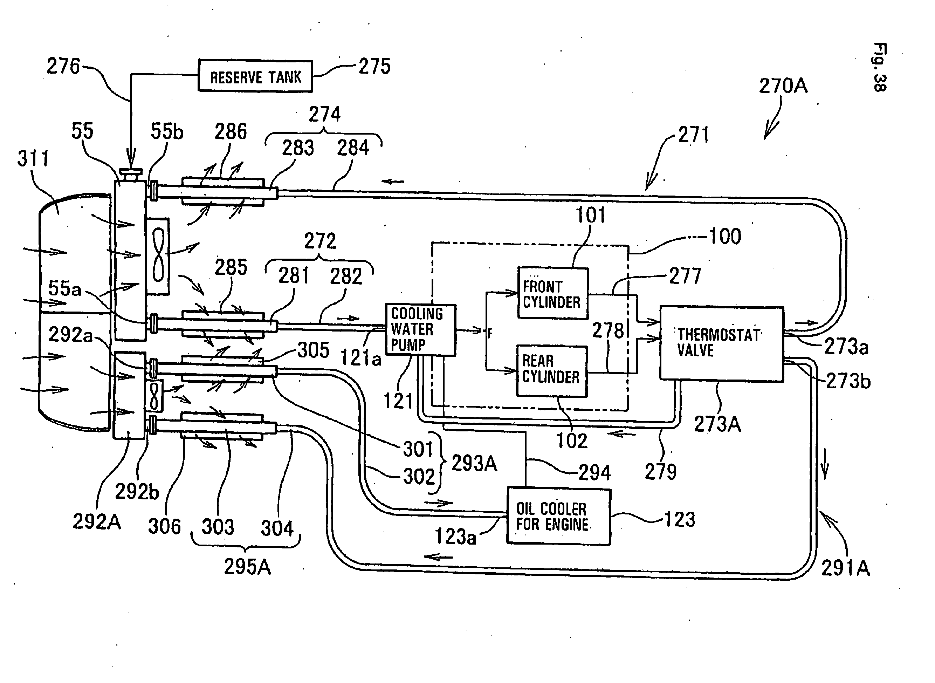

Next, referring to Figs. 38 to 40, a transformed example of the circulating system 270 of liquid will be described. The same reference number is allocated to the similar configuration to the configuration shown in Figs. 28 to 37 and the description is omitted.

Fig. 38 is a schematic diagram showing a circulating system of liquid (in a transformed example) for circulating to the engine according to the invention, and a circulating system 270A in the transformed example is characterized in that an engine cooling water circulating system 271 and an oil cooler cooing water circulating system 291A are completely or substantially separated.

Concretely, the circulating system 270A of liquid is composed of the engine cooling water circulating system 271 for circulating cooling water for cooling the engine 100 itself and the oil cooler cooling water circulating system 291 A for circulating cooling water for cooling the oil cooler 123 for the engine for example.

The engine cooling water circulating system 271 is the same as the circulating system 271 shown in Fig. 28.

The oil cooler cooling water circulating system 291A is composed of a sending line 293A for sending cooling water from a radiator 292A for the oil cooler to the oil cooler 123, a return line 294 for returning cooling water from the oil cooler 123 to the cooling water pump 121 and a return line 295A for returning cooling water from a thermostat valve 273A to the radiator 292A for the oil cooler.

The thermostat valve 273A in the transformed example is provided with two outlets (outlets 273a, 273b) of cooling water.

Cooling water is circulated in a path from the radiator 292A for the oil cooler to the radiator 292A for the oil cooler through the sending line 293A, the oil cooler 123, the return line 294, the cooling water pump 121, each water-cooled jacket (not shown) of the front cylinder 101 and the rear cylinder 102 of the water-cooled engine 100, the thermostat valve 273A and the return line 295A.

The sending line 293A is liquid piping composed of a sending pipe 301 one end of which is connected to a sending port 292a of the radiator 292A for the oil cooler and a sending hose 302 connected from the other end of the sending pipe 301 to an inlet 123a of the oil cooler 123.

The return line 295A is liquid piping composed of a return pipe 303 one end of which is connected to a return port 292b of the radiator 292A for the oil cooler and a return hose 304 connected from the other end of the return pipe 303 to an outlet 273b of the thermostat valve 273A.

The sending pipe 301 and the return pipe 303 of the oil cooler cooling water circulating system 291A are provided with cooling fins 305, 306 on the respective outside faces.

The duct 311 is provided between the front cover 71 (see Fig. 2) and each radiator 55, 292A.

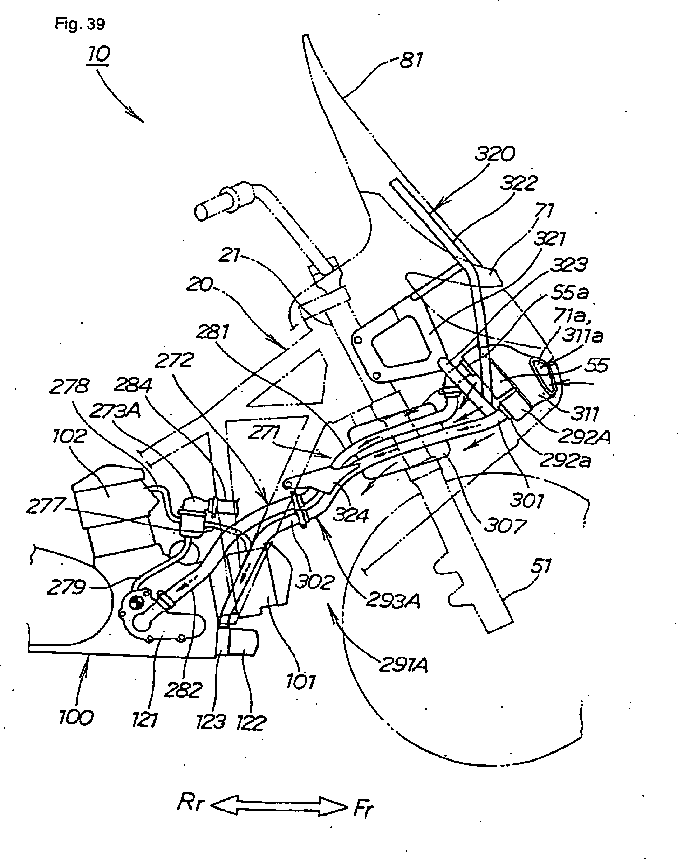

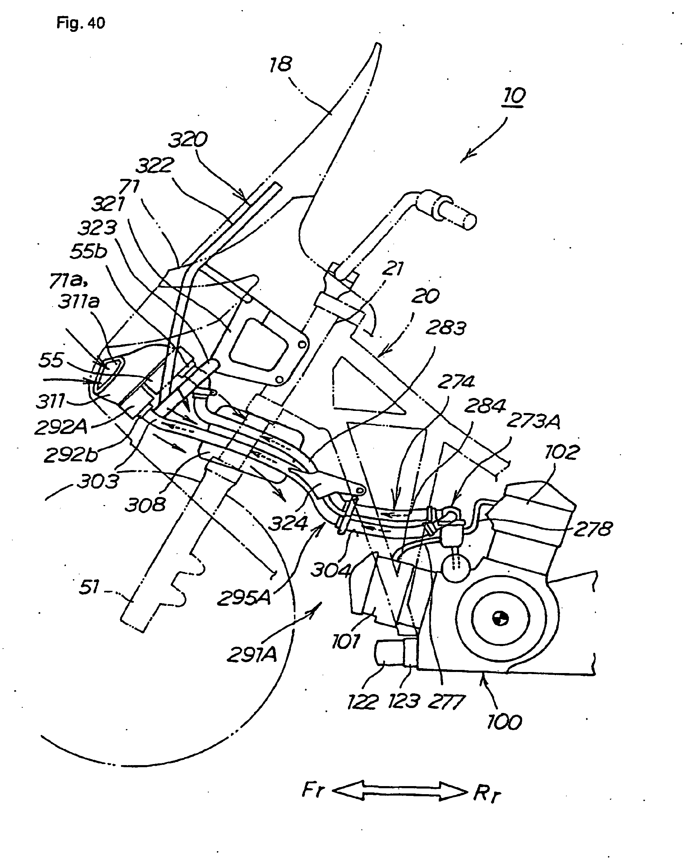

Referring to Figs. 39 and 40, the detailed configuration of the sending and return pipes 281, 283 of the engine cooling water circulating system 271 and the sending and return pipes 301, 303 of the oil cooler cooling water circulating system 291A will be described below.

In Fig. 39, a cooling fin 307 acquired by integrating the cooling fins 285, 305 shown in Fig. 38 is shown and in Fig. 40, a cooling fin 308 acquired by similarly integrating the cooling fins 286, 306 are shown. However, these cooling fins 285, 286, 305, 306 may be also separately provided.

Fig. 39 is a piping drawing (No. 1) showing the stay and the sending and return pipes (in a transformed example) of the engine cooling water circulating system respectively according to the invention viewed from the right side, and Fig. 40 is a piping drawing (No. 2) showing the stay and the sending and return pipes (in the transformed example) of the engine cooling water circulating system respectively according to the invention viewed from the left side.

A stay 320 in the transformed example is characterized in that it has configuration described in the following (1) and (2).
(1) As shown in Fig. 39, the stay has configuration that two fourth stays 281, 301, that is, sending pipes 281, 301 are collectively passed on one side of the front fork 51 and a cooling fin 307 is provided along the outside faces of the sending pipes 281, 301.
(2) As shown in Fig. 40, the stay has configuration that two fourth stays 283, 303, that is, return pipes 283, 303 are collectively passed on the other side of the front fork 51 and a cooling fin 308 is provided along the outside faces of the return pipes 283, 303.

In the embodiment, one is shared by the cooling water pump 121 and the thermostat valve 273A, however, separate ones are provided, and the engine cooling water circulating system 271 and the oil cooler cooling water circulating system 291A may be also completely and independently separated.

As described above, it is facilitated to optimize the temperature of each cooling water circulating system 271, 291A by completely separating the engine cooling water circulating system 271 and the oil cooler cooling water circulating system 291A.

As for the circulating systems of liquid 270, 270A, this structure can be applied to an oil cooler of a water-cooled engine.

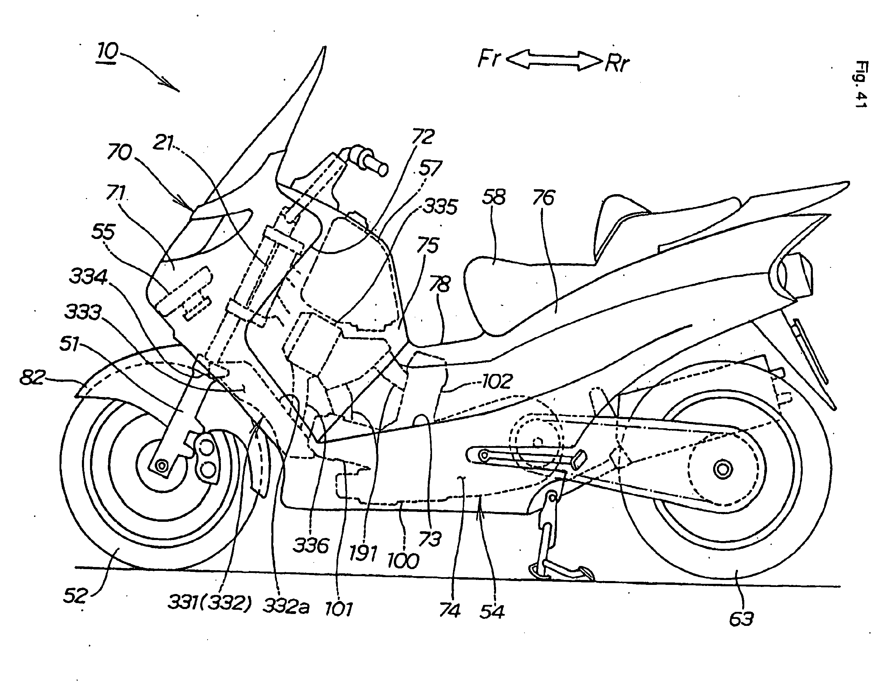

Next, referring to Figs. 41 to 44, a transformed example of the cleaner case 201, that is, the intake chamber for the engine 201 of the air cleaner 56 shown in Fig. 18 will be described. The same reference number is allocated to the similar configuration to each configuration shown in Figs. 1 to 24 and the description is omitted.

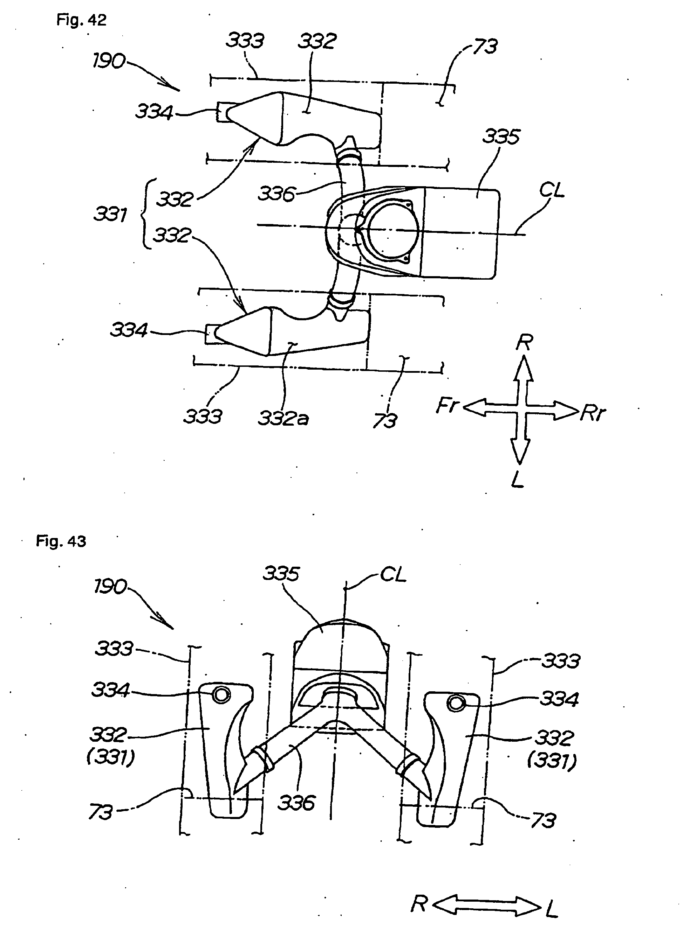

Fig. 41 is a left side view showing the low deck vehicle in which an intake chamber for the engine (a first transformed example) according to the invention is mounted, Fig. 42 is a plan showing the intake chamber for the engine (the first transformed example) according to the invention and Fig. 43 is a front view showing the intake chamber for the engine (the first transformed example) according to the invention.

An intake chamber 331 for the engine in the first transformed example is composed of a pair of right and left first intake chambers 332, 332 arranged on both right and left sides of the front wheel 52. Detailedly, the right and left first intake chambers 332, 332 are arranged on both right and left sides of the front wheel 52 and on the rear upside of the front wheel 52 and are arranged inside cover extended parts 333, 333 extended backward and downward on the right and left sides out of the front cover 71. Therefore, the first intake chambers 332, 332 are elongated members extended backward and downward along the cover extended parts 333, 333 when the first intake chambers are viewed from the side and are provided with intake pipes 334, 334 extended forward from the front upper end.

Further, the top faces 332a, 332a inclined backward and downward of the first intake chambers 332, 332 are formed to be substantially flat faces so that the first intake chambers also function as a part of footrests for putting rider's feet. The first intake chambers 332, 332 have only to be arranged so that the top faces 332a, 332a are extended from the front ends of the right and left low decks 73, 73 for putting rider's feet forward and upward. Hereby, the rider can arbitrarily put his/her feet on the low decks 73, 73 and on the top faces 332a, 332a.

The first transformed example is characterized in that a second intake chamber 335 connected to the first intake chambers 332, 332 on the downstream side is arranged over the first intake chambers 332, 332 and in the center of the width of the body (in the center of the body) CL and an accessory part for the engine such as the fuel tank 57 (see Fig. 41) is arranged over the second intake chamber 335.

Therefore, in an intake system 190 in the first transformed example, the second intake chamber 335 on the downstream side is coupled to the first intake chambers 332, 332 on the upstream side via a substantially reverse Y-type chamber coupling pipe 336 when the chamber coupling pipe is viewed from the front, and further, each cylinder 101, 102 of the V-type engine 100 is coupled to the second intake chamber 335 via intake coupling pipes 191, 191.

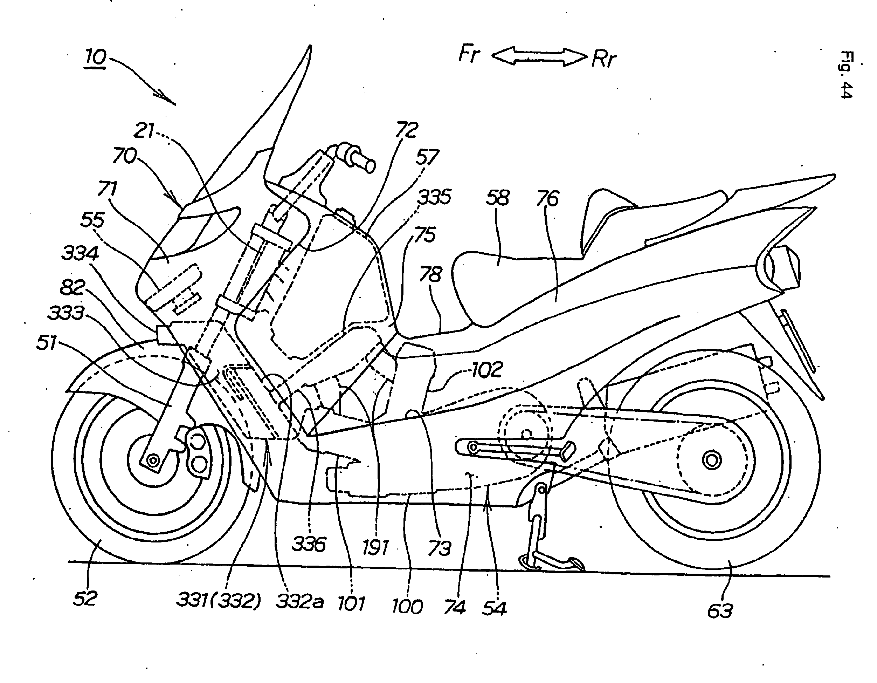

Fig. 44 is a left side view showing the low deck vehicle in which an intake chamber for the engine (a second transformed example) according to the invention is mounted.

In an intake system 190 in the second transformed example, the total capacity is secured by large-sizing a pair of right and left first intake chambers 332, 332 arranged on both right and left sides of the front wheel 52 and thinning a second intake chamber 335 arranged on the first intake chambers 332, 332. The second intake chamber 335 is lowered by quantity in which the second intake chamber 335 is thinned. Therefore, as larger space can be provided above the second intake chamber 335, an accessory part for the engine such as the fuel tank 57 having large capacity can be easily arranged.

The above-mentioned intake system 190 will be collectively described below.

As at least one space out of space heretofore unused on the side of the front wheel 52 in the low deck vehicle 10 is effectively utilized and the intake chamber 331 for the engine is arranged, space for arranging the intake chamber 331 having large capacity can be sufficiently secured. As the capacity of the intake chamber 331 can be increased, the performance of the engine 100 can be sufficiently exercised. Therefore, the low deck vehicle 10 can be made a vehicle having higher ride comfort and higher driving performance. In addition, as the intake chamber having large capacity can be adopted, noise by aerial vibration in the intake chamber 331 can be reduced.

Further, as large space for arranging the intake chamber 331 can be secured, a degree of freedom in designing the intake system 190 is enhanced. Furthermore, the center of the gravity of the low deck vehicle 10 can be lowered by arranging the intake chamber for the engine 331 on the side of the front wheel 52. Therefore, the controllability of the low deck vehicle 10 is more enhanced.

Furthermore, as the intake chamber for the engine 331 is formed by a pair of right and left first intake chambers 332, 332 arranged on both right and left sides of the front wheel 52, a pair of right and left first intake chambers 332, 332 having large capacity can be arranged in space on both right and left sides of the front wheel 52. The total capacity of the intake chamber for the engine 331 can be more increased.

Further, as the second intake chamber 335 on the downstream side connected to the first intake chambers 332, 332 is further arranged over the right and left first intake chambers 332, 332 having large capacity, the total capacity of the intake chamber for the engine 331 can be greatly increased.

Heretofore, as an intake chamber was often arranged in space above a V-type engine 100, there was a limit in arranging another part in such space.

In the meantime, the engine 100 according to the invention is a V-type engine provided with the V-type arranged cylinders 101, 102 in the center of the body. Such a problem can be solved by arranging the intake chamber for the engine 331 on the side of the front wheel 52. That is, as space is produced above the V-type engine 100, an accessory part for the engine such as the fuel tank 57 can be arranged in the space.

Besides, as a pair of right and left first intake chambers 332, 332 are arranged on both right and left sides of the front wheel 52, the second intake chamber 335 can be arranged in a low position. Therefore, an accessory part for the engine such as the fuel tank 57 can be easily arranged above the low second intake chamber 335.

Furthermore, the number of parts of a footrest can be reduced by making a pair of right and left first intake chambers 332, 332 also function as a part of the footrest. As a result, the low deck vehicle 10 can be lightened and the cost can be reduced. Further, the pulsation of air in the right and left first intake chambers 332, 332 can be directly felt by feet via each wall of the chambers 332, 332 by driving, putting the feet on a pair of right and left first intake chambers 332, 332. As described above, the pulsation of a power system can be felt, reducing noise by aerial vibration in the first and second intake chambers 331, 335.

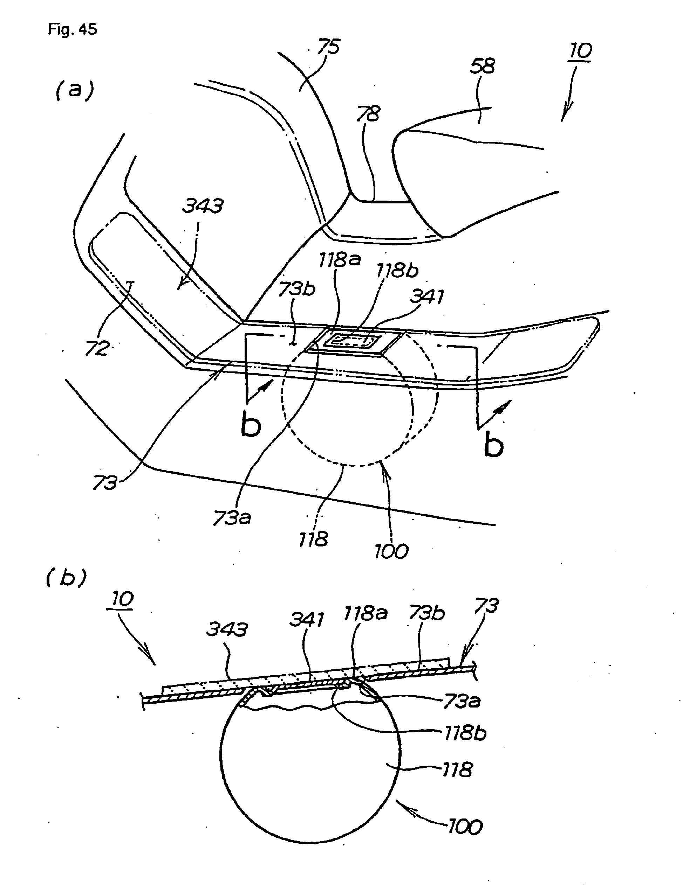

Next, referring to Figs. 45, relation between the low deck 73 and the engine 100 will be described.

Figs. 45A and 45B show configuration around the low deck according to the invention, Fig. 45A is a perspective view showing the circumference of the left low deck 73 and Fig. 45B is a sectional view viewed along a line b-b in Fig. 45A, that is, a sectional view showing the circumference of the left low deck 73 viewed from the left side.

These drawings show that in the low deck vehicle 10 such as a scooter-type motorcycle or three-wheeled vehicle in which the engine 100 is arranged below the low deck 73, an opposite part of the engine 100 also functions as a footrest for putting a rider's foot by cutting out a part (73a) of the low deck 73 and making a part of the engine 100 opposite to the cut-out part 73a.

A part opposite to the cut-out part 73a of the engine 100 means cover 118 for covering the AC generator 116 (see Fig. 11) annexed to the engine 100, that is, a left side cover 118 for example. The top face 118a of the left side cover 118 is a flat plane 118a, an opening 118b for a check 118b is provided to the plane 118a and is closed by a lid 341 which can be detached. The invention is characterized in that the plane 118a of the left side cover 118 has a substantially horizontal face along the floor face (the top face) 73b of the low deck 73 and is set to the substantially same level as the low deck 73.

As a part of the low deck 73 is cut out (73a) and a part (that is, the upside of the left side cover 118) of the engine 100 is opposite to the cut-out part 73a, no clearance between the low deck and the engine 100 is required to be made under the low deck 73. The low deck 73 can be lowered by the quantity. In addition, as a part of the engine 100 opposite to the cut-out part 73a of the low deck 73 also functions as a footrest for putting a rider's foot, area for putting the foot can be sufficiently secured. As a result, space is produced below the rider's foot. Therefore, the fatigue of the rider can be more reduced. Further, not only the footrest of the rider but a footrest of a passenger acquired by extended the footrest backward can be provided to the low deck 73.

Furthermore, the low deck 73 can be lowered by the light and simple configuration. Besides, though the low deck 73 is lowered, the engine 100 can be also lifted and hereby, the operationability of the check and maintenance of the engine 100 can be enhanced.

Besides, as a part of the engine 100 opposite to the cut-out part 73a is a flat plane at the substantially same level as the low deck 73, a part of the engine 100 opposite to the cut-out part 73a can also function as a part of the footrest on the low deck 73 more effectively. The rider can put his/her foot on the low deck 73 and on the engine 100 opposite to the cut-out part 73a with his/her leg extended freely. Therefore, the fatigue of the rider can be more reduced.

Besides, as a part of the engine 100 is formed by the left side cover 118 covering the AC generator 116 annexed to the engine 100, the AC generator 116 can be easily checked and maintained by detaching a part of the left side cover 118.

Besides, as the opening for a check 118b is provided to the top face 118a of the left side cover 118 and the opening for a check 118b is closed by the lid 341 which can be detached, the AC generator 116 can be more easily checked and maintained from the opening for a check 118b by opening the lid 341.

Besides, as the cut-out part 73a is covered with a floor mat 343 on the floor face (the top face) 73b of the low deck 73 by arranging the floor mat 343 at least covering the cut-out part 73a, a dust-proof effect of a part (that is, the upside of the left side cover 118) of the engine 100 opposite to the cut-out part 73a can be enhanced and the appearance performance of the low deck vehicle 10 can be enhanced.

Next, structure for fixing the muffler 245 (the muffler for exhaust 245) will be described.

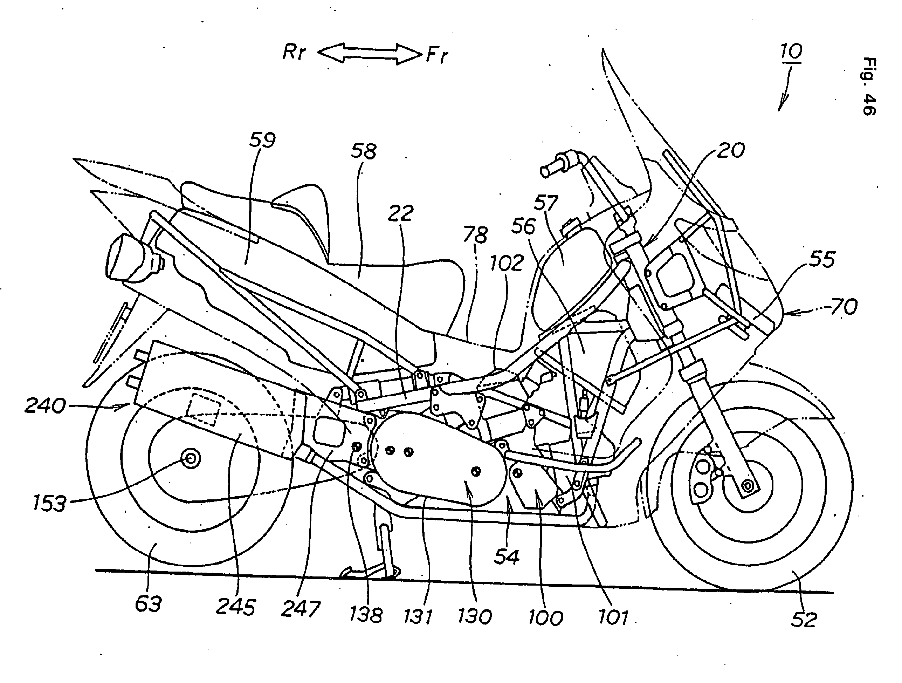

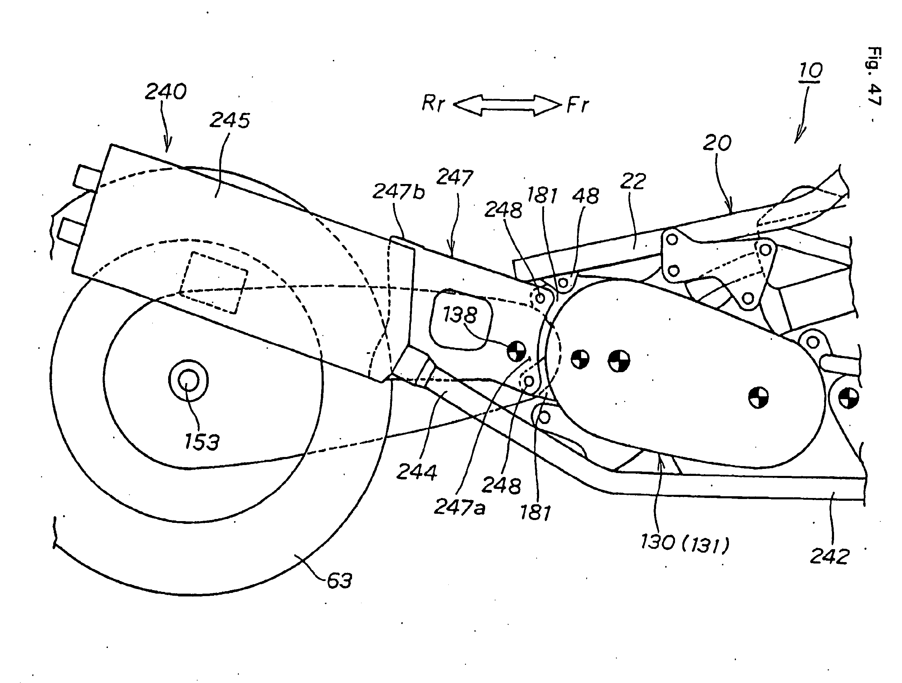

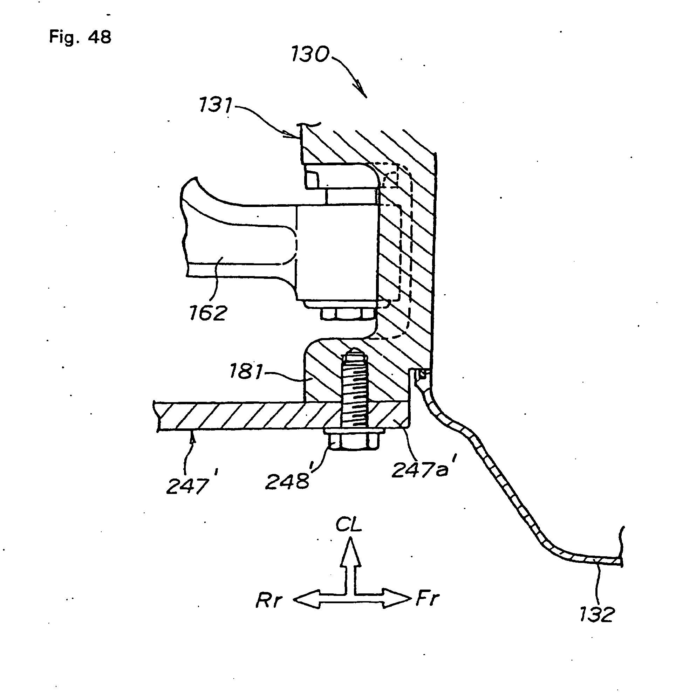

Fig. 46 is a right side view showing the low deck vehicle in a state in which the muffler according to the invention is fixed, Fig. 47 is a right side view showing a state in which the muffler according to the invention is fixed, and Fig. 48 is a top sectional view showing structure for attaching a muffler stay to the transmission unit according to the invention.

To explain also referring to Figs. 10 and 23, the low deck vehicle 10 is characterized in that the muffler for exhaust 245 (the muffler 245) is fixed to the rear of the case 131 for the transmission unit 130. Detailedly, the muffler for exhaust 245 is attached to the case 131 via the muffler stay 247'. The muffler for exhaust 245 and the muffler stay 247' are extended substantially on a line extended in a longitudinal direction of the case 131.

To explain more concretely, stay attached parts 181, 181 are integrated with the right rear of the main case 131, a base 247a' of the muffler stay 247' which is a substantially longitudinal plate is attached to each right side of the stay attached parts 181, 181 by upper and lower two bolts 248', 248', the muffler stay 247' is extended at the back of the case 131 and is fixed to its extended end 247b' by welding or a bolt.

The structure for fixing the above-mentioned muffler for exhaust 245 will be collectively described below.

As the muffler for exhaust 245 is fixed to the rear of the case 131 of the transmission unit 130, the muffler for exhaust 245 can be attached and united to the engine 100 via the transmission unit 130. As the engine 100 to which the muffler for exhaust 245 is united can be attached to the body frame 20, the workability of assembly can be enhanced. Therefore, the workability of the assembly of the low deck vehicle 10 can be enhanced. In addition, the case 131 can also function as a part for fixing the muffler for exhaust 245. Therefore, a fixing member can be reduced and workability in attaching the muffler for exhaust 245 can be enhanced. Further, the length of the exhaust pipes 241, 242 can be secured.

Furthermore, as a part for straddling 78 located at height at which a rider can straddle in sitting on the seat is provided to the center of the body, the engine 100 is provided under the part for straddling 78 and the transmission unit 130 is provided to the engine 100, the engine 100 and the transmission unit 130 can be arranged in a low position in the center of the body. Besides, as the muffler for exhaust 245 is fixed to the rear of the case 131, it can be arranged in a low position in the rear of the body. As a result, the center of the gravity of the low deck vehicle 10 is lowered and the weight can be balanced by arranging the engine 100, the transmission unit 130 and the muffler for exhaust 245 in a low position with simple configuration.

Further, as the body frame 20 is a diamond frame and the engine 100 is suspended by the diamond frame, the engine in a state in which the muffler for exhaust 245 is united can be made a part of the body frame 20. Therefore, the workability of the assembly of the low deck vehicle 10 can be enhanced.

Further, as the engine 100 can be made a part of the body frame 20, no frame member is required to be passed under the engine 100. Therefore, the engine 100 can be lowered up to the minimum road clearance. As a result, a degree of freedom in mounting the engine 100 can be more enhanced. In addition, the center of the gravity of the low deck vehicle 10 can be lowered by lowering the engine 100.

Furthermore, as a power transmission mechanism 150 is arranged on the side reverse to the side of the case 131 in relation to a center line CL (see Fig. 23) of the width of the body, the right muffler for exhaust 245 fixed to the case 131 and the left power transmission mechanism 150 can be distributed on the right and left sides. Therefore, a degree of freedom in arranging the muffler for exhaust 245 and the exhaust pipes 241, 242 can be increased and the balance of the right and left weight of the low deck vehicle 10 can be enhanced.

Besides, as the muffler for exhaust 245 is extended substantially on the line extended in the longitudinal direction of the case 131, the case 131 on the front side and the muffler for exhaust 245 on the rear side respectively in an assembled state can have appearance which gives feeling of integration, thinness and lightness. Therefore, the appearance performance of the low deck vehicle 10 can be enhanced.

Besides, as the muffler for exhaust 245 is attached to the case 131 via the muffler stay 247 and the muffler stay 247 is extended substantially on the line extended in the longitudinal direction of the case 131, a unit having configuration that the muffler for exhaust 245 on the rear side is attached to the case 131 on the front side via the muffler stay 247 can have the appearance which gives a feeling of integration, thinness and lightness. Therefore, the appearance performance of the low deck vehicle 10 can be enhanced.

As at least one exhaust pipe out of plural exhaust pipes 241, 242 is passed in space under the case 131, the space under the case 131 can be effectively utilized. Further, as at least one exhaust pipe can be arranged in a low position, the center of the gravity of the low deck vehicle 10 can be lowered and as a result, the driving performance of the low deck vehicle 10 can be more enhanced.

As the exhaust pipe 242 for the front cylinder connected to the front cylinder 101 of the V-type engine 100 is extended backward through the downside of the case 131, the exhaust pipe 241 for the rear cylinder connected to the rear cylinder 102 is extended backward through the downside of the case 131 after it is extended downward and the rear end of each exhaust pipe 241, 242 for the front and rear cylinders is connected to the muffler for exhaust 245, the space under the case 131 can be effectively utilized. In addition, the center of the gravity of the low deck vehicle 10 can be lowered and as a result, the driving performance of the low deck vehicle 10 can be more enhanced.

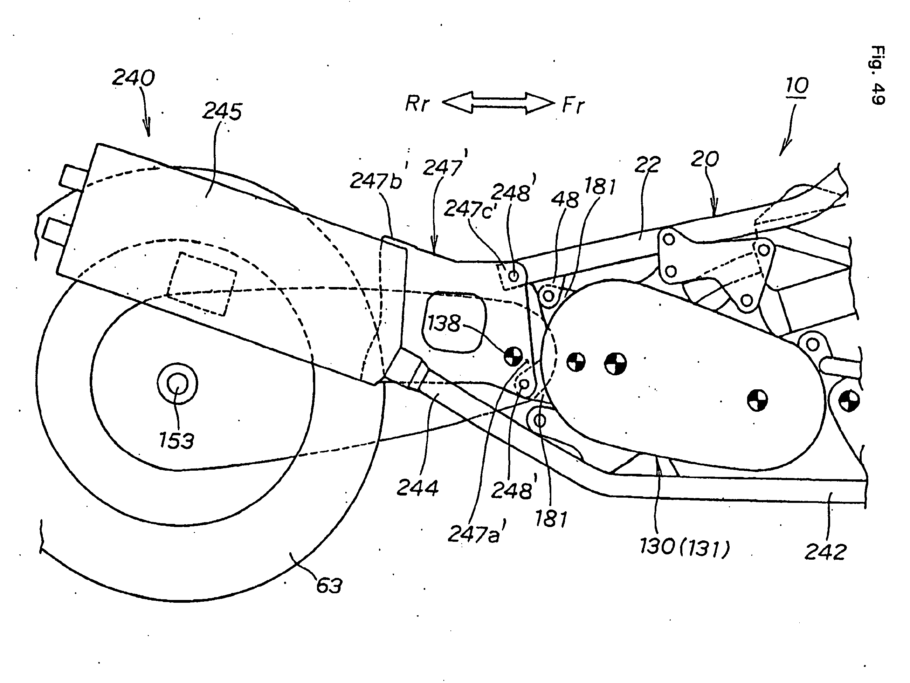

Fig. 49 shows a transformed example of the structure for fixing the muffler according to the invention and corresponds to the embodiment shown in Fig. 47. Structure for fixing a muffler 245 in the transformed example is characterized in that a part of a muffler stay 247', that is, a part of a base 247a' is extended to the vicinity of the rear of the case 131 and the end 247c' is attached to the upper frame 22 of the body frame 20 by a bolt 248'. The other configuration is the same as those shown in Fig. 10, 23 and 28 to 30, the same reference number is allocated and the description is omitted.

According to the transformed example, a part of the muffler stay 247' is extended to the vicinity of the rear of the case 131 and the end is attached to the body frame 20, the muffler for exhaust 245 can be attached to both the case 131 and the body frame 20 via the small-sized muffler stay 247. Therefore, the muffler for exhaust 245 can be more firmly attached. In addition, as the muffler stay 247' for attaching to the case 131 also functions as an attachment for attaching to the body frame 20, the number of attachments is not increased.

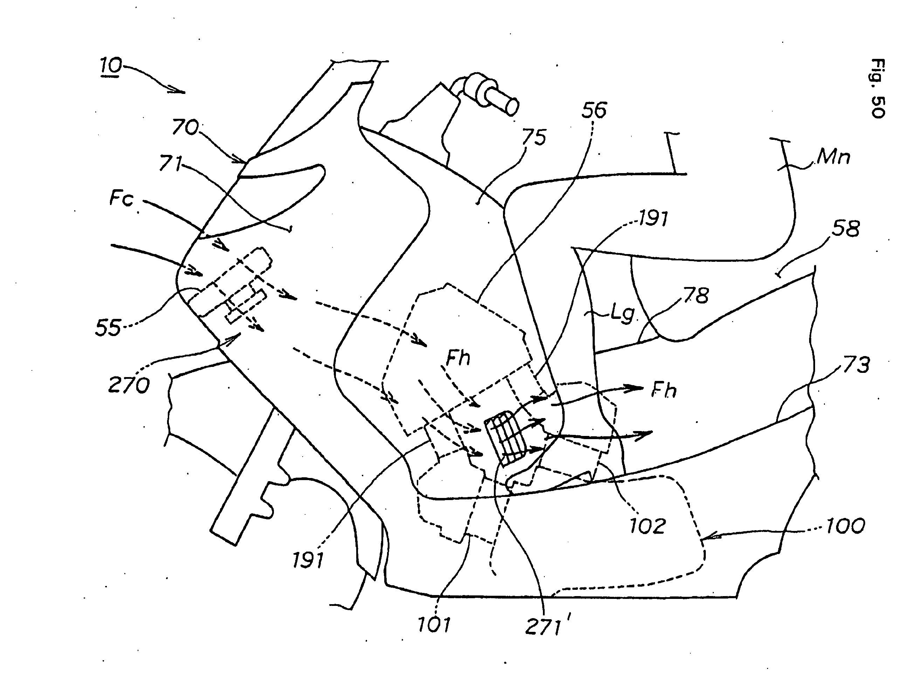

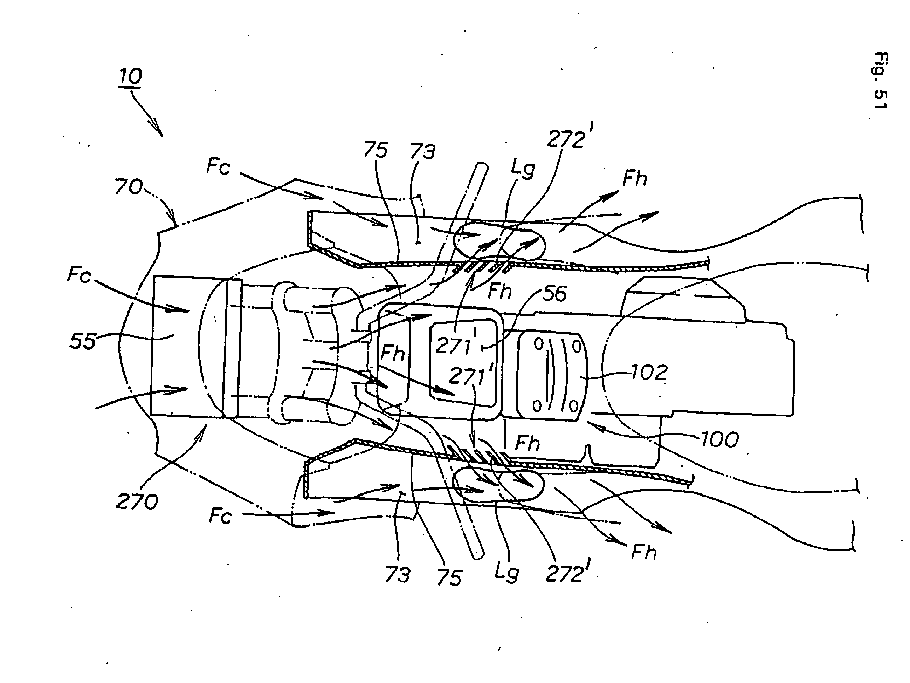

Next, the configuration of an engine cooling system 270 for cooling the engine 100 by the radiator 71 will be described. Fig. 50 is a left side view showing the engine cooling system according to the invention and Fig. 51 is a top sectional view showing the engine cooling system according to the invention.

To explain also referring to Figs. 1, 3 and 24, the low deck vehicle 10 is characterized in that exhaust wind ports 271', 271' for exhausting exhaust wind from the radiator 55 for the engine outside the body are provided on both right and left sides of the center cover 75' out of the body cover 70 and in a position between the front cylinder 101 an the rear cylinder 102. As described above, the rear cylinder 102 is opposite to the part for straddling 78.

The exhaust wind ports 271', 271' are a substantially rectangular opening when the exhaust wind port is viewed from the side which is provided so that exhaust wind flows backward along the outside face of the part for straddling 78 and are respectively provided with plural straightening vanes (louvers) 272', --- shown in Fig. 51.

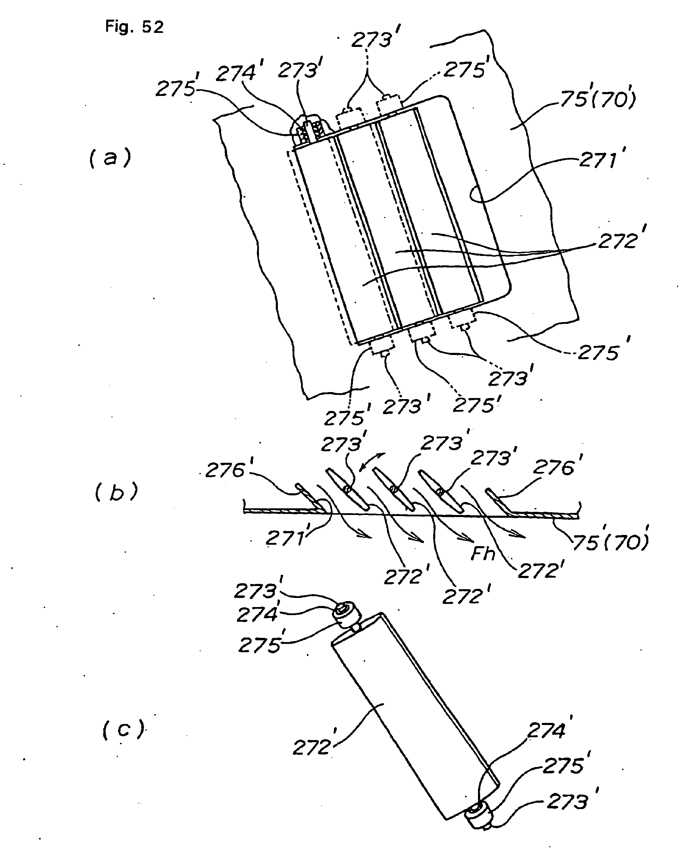

Figs. 52A to 52C show the configuration of the exhaust wind port and the straightening vanes according to the invention. Fig. 52A shows the configuration of the left exhaust wind port 271' and the straightening vanes 272', --- respectively viewed from the left side and corresponds to Fig. 50. Fig. 52B is a sectional view showing the configuration of the left exhaust wind port 271' and the straightening vanes 272', --- respectively viewed from the top and corresponds to Fig. 51. Fig. 52C is a perspective view showing the straightening vane 272'.

Figs. 52 show that the plural straightening vanes 272', --- are a variable straightening vane the angle of which can be arbitrarily set. To explain detailedly, these straightening vanes 272', --- are a flat plate which is vertically narrow and long and to which the exhaust wind port 271' is provided so that the port can be closed, and supporting pins 273', 273' arranged concentrically at the upper end and the lower end are integrated.

The supporting pins 273', 273' are shanks supported by bearings 275', 275' via bushes 274', 274' made of rubber so that the supporting pins can be turned at the edge of the exhaust wind port 271'. Such supporting pins 273', 273' are firmly fitted to the bushes 274', 274' made of rubber so that they can be turned. Therefore, frictional resistance between the supporting pins 273', 273' and the bushes 274', 274' made of rubber is set to magnitude to the extent that the straightening vane 273' can be turned by slightly strong force. The bearings 275', 275' are a member attached to the center cover 75'. Reference numbers 276', 276' denote an exhaust wind guide provided to the edge of the exhaust wind port 271'.

The above-mentioned engine cooling system 270 will be collectively described below.

Running wind Fc enters the inside of the body cover by running the low deck vehicle 120 forward and heat exchange is applied to it in the radiator 55.

Exhaust wind Fh after the heat exchange cools the air cleaner 56, the intake coupling pipes 191, 191 and the front and rear cylinders 101, 102 of the engine 100, flowing backward inside the body cover 70 and is exhausted outside the body from the exhaust wind ports 271, 271.

The exhausted exhaust wind Fh flows backward along the outside face of the part for straddling 78 and flows backward after the exhaust wind warms the legs Lg of a rider Mn.

Exhaust wind Fh after the heat exchange in the radiator 55 can cool the front and rear cylinders 101, 102 of the engine 100, flowing backward inside the body cover 70 by providing the radiator 55 in the front inside the body cover 70 and providing the exhaust wind ports 271', 271' for exhausting exhaust wind from the radiator 55 outside the body on both right and left sides of the body cover 70 and between the front cylinder 101 and the rear cylinder 102. Therefore, though the water-cooled engine 100 is covered with the body cover 70, the temperature of the water-cooled engine 100 can be stabilized.

Further, as the part for straddling 78 at height at which the rider Mn can straddle in sitting on the seat is provided in front of the seat 58 and between the right and left low decks 73, 73 and the water-cooled engine 100 is provided under the part for straddling 78, the water-cooled engine 100 can be arranged in the center CL of the body. In the meantime, as the radiator 55 for the engine is provided in the front inside the body cover 70, the radiator 55 can be arranged in the front of the body in which cooling efficiency by running wind Fc is high. Therefore, piping from the radiator 55 to the water-cooled engine 100 can be shortened, a degree of the freedom of the piping can be enhanced. In addition, as the water-cooled engine 100 is arranged in the center CL of the body, balance in weight between the front and the rear of the low deck vehicle 10 can be more enhanced though the water-cooled engine 100 is a large-sized and heavy engine such as the longitudinal V-type engine 100.

In addition, as the exhaust wind ports 271', 271' are provided on both right and left sides of the body cover 70 between the front cylinder 101 and the rear cylinder 102 in the water-cooled engine 100 arranged in the center CL of the body, distance between the radiator 55 arranged in the front inside the body cover 70 and the exhaust wind ports 271', 271' can be made relatively large. Besides, exhaust wind Fh exhausted outside the body from the exhaust wind ports 271', 271' can be mixed with running wind Fc flowing backward along the part for straddling 78. Hereby, the adjustment of a passage for optimizing the gas capacity and the temperature of the exhaust wind Fh exhausted from the exhaust wind ports 271', 271' is facilitated.

Furthermore, as the rear cylinder 102 is opposite to the part for straddling 78, the rear cylinder 102 can be efficiently cooled by exhaust wind Fh flowing inside the part for straddling 78.

Further, as the exhaust wind ports 271', 271' are directed so that exhaust wind Fh flows backward along the outside face of the part for straddling 78, the legs Lg of the rider Mn can be efficiently warmed by exhaust wind Fh after the heat exchange in the radiator 55.

Besides, as the variable straightening vanes 272', --- the angle of which can be arbitrarily set are provided to the exhaust wind ports 271', 271', the direction and the gas capacity of exhaust wind Fh exhausted from the exhaust wind ports 271', 271' can be arbitrarily adjusted by adjusting the angle of the variable straightening vanes 272', ---. Therefore, warmness around the legs Lg can be adjusted by adjusting the direction and the gas capacity of exhaust wind Fh flowing in a direction of the legs Lg according to the choice of the rider Mn.

In the embodiments of the invention, the low deck vehicle 10 is not limited to a scooter-type motorcycle and may be also another motorcycle, a three-wheeled vehicle and a four-wheeled vehicle.

Besides, the configuration of the variable straightening vanes 272', --- are arbitrary and for example, all variable straightening 272',vanes may be also simultaneously displaced.

The invention enables enhancing the performance of an engine mounted in a low deck vehicle. To achieve this in a low deck vehicle 10 such as a scooter-type motorcycle or three-wheeled vehicle, a housing box 59 is provided under a seat 58, right and left low decks 73 for a rider seated on the seat to put his/her feet are provided on the front side of the seat, a part for straddling 78 at height at which the rider can straddle in sitting on the seat is provided between the right and left low decks and an engine 100 is provided under the part for straddling. In the engine, a crankshaft 103 is arranged under the part for straddling and the top of a rear cylinder 102 is opposite to the part for straddling. A fuel tank is arranged in front of the part for straddling.

Further the invention enables lowering a low deck, sufficiently securing area for putting a rider's foot on the low deck and providing a footrest for the rider and a footrest for a passenger on the low deck in a low deck vehicle in which an engine is arranged below the low deck.

To achieve this, a low deck vehicle 10 is a scooter-type motorcycle in which an engine 100 is arranged below a low deck 73. A part of the engine also functions as a footrest for putting a rider's foot by cutting out a part of the low deck 73a and making a part of the engine opposite to the cut-out part. A part of the engine opposite to the cut-out part is a cover 118 covering an AC generator annexed to the engine, an opening for a check 118b is provided to the top face 118a, the top face is made a flat plane and the plane is set to the substantially same level as the low deck.

Further, the invention facilitates the adjustment of a passage for optimizing the gas capacity and the temperature of the exhaust wind of a radiator exhausted from an exhaust wind port. To enhance the balance of weight in a low deck vehicle in which a heavy engine is mounted. To shorten piping from the radiator to the water-cooled engine and to enhance a degree of the freedom of the piping.

To achieve this, a low deck vehicle 10 is a longitudinal V-type engine in which the body is covered with a body cover 70, right and left low decks 73 for putting the feet of a rider Mn seated on a seat are provided before the seat 58, a part for straddling 78 at height at which the rider can straddle in sitting on the seat is provided between the right and left low decks and a water-cooled engine 100 is provided under the part for straddling. The water-cooled engine is the longitudinal V-type engine provided with a front cylinder 101 and the rear cylinder 102. A radiator 55 for the engine is provided in the front inside the body cover and an exhaust wind port 271' for exhausting exhaust wind Fh from the radiator outside the body is provided on both right and left sides of the body cover and between the front cylinder and the rear cylinder.

## Claims

1. A low deck vehicle such as a scooter-type motorcycle or three-wheeled vehicle in which housing space (59)is provided under a seat(58), right and left low decks (73) for a rider seated on the seat to put his/her feet are provided on the front side of the seat (58), a part for straddling (78) at height at which the rider can straddle in sitting on the seat (58) is provided between the right and left low decks (73) and an engine (100) is provided under the part for straddling (78), **characterized in that**:
a crankshaft (103)of the engine (100) is arranged under the part for straddling (78) below the right and left low decks (73); and the top of a cylinder (102) is opposite to the part for straddling (78).

2. A low deck vehicle according to Claim 1, wherein:
a fuel tank (57) is arranged before the part for straddling (78).

3. A low deck vehicle according to Claim 1 or 2, wherein:
the engine (100) is a V-type engine provided with a front cylinder (101) and a rear cylinder (102).

## Patentansprüche

1. Tiefboden-Fahrzeug, wie etwa ein Roller-artiges Kraftrad oder dreirädriges Fahrzeug, in dem ein Aufnahmeraum (59) unter einem Sitz (58) vorgesehen ist, rechte und linke tiefliegende Böden (73) zum Aufsetzen der Füße eines auf dem Sitz sitzenden Fahrers an der Vorderseite des Sitzes (58) vorgesehen sind, ein Überbrückungsteil (78) in einer Höhe, die der auf dem Sitz (58) sitzende Fahrer überbrücken kann, zwischen den rechten und linken tiefliegenden Böden (73) vorgesehen ist, und ein Motor (100) unter dem Überbrückungsteil (78) vorgesehen ist, **dadurch gekennzeichnet, dass**:
eine Kurbelwelle (103) des Motors (100) unter dem Überbrückungsteil (78) unter den rechten und linken tiefliegenden Böden (73) angeordnet ist; und
die Oberseite eines Zylinders (102) dem Überbrückungsteil (78) gegenüberliegt.

2. Tiefboden-Fahrzeug nach Anspruch 1, wobei ein Kraftstofftank (57) vor dem Überbrückungsteil (78) angeordnet ist.

3. Tiefboden-Fahrzeug nach Anspruch 1 oder 2, wobei der Motor (100) ein Motor in V-Bauart ist, der mit einem vorderen Zylinder (101) und einem hinteren Zylinder (102) versehen ist.

## Revendications

1. Véhicule à plancher bas tel qu'une moto de type scooter ou véhicule à trois roues dans lequel un espace d'accueil (59) est prévu sous un siège (58), des planchers bas droit et gauche (73) pour qu'un conducteur assis sur le siège pose ses pieds sont prévus sur le côté avant du siège (58), une partie à enfourcher (78) à une hauteur à laquelle le conducteur peut enfourcher en s'asseyant sur le siège (58) est prévue entre les planchers bas droit et gauche (73) et un moteur (100) est prévu sous la partie à enfourcher (78), **caractérisé en ce que** :
un vilebrequin (103) du moteur (100) est agencé sous la partie à enfourcher (78) sous les planchers bas droit et gauche (73) ; et
la partie supérieure d'un cylindre (102) est opposée à la partie à enfourcher (78).

2. Véhicule à plancher bas selon la revendication 1, dans lequel :
un réservoir de carburant (57) est agencé avant la partie à enfourcher (78).

3. Véhicule à plancher bas selon la revendication 1 ou 2, dans lequel :
le moteur (100) est un moteur de type V pourvu d'un cylindre avant (101) et d'un cylindre arrière (102).
